(19) Europäisches Patentamt
European Patent Office
Office européen des brevets

(11) **EP 4 432 725 A1**

(12) **EUROPEAN PATENT APPLICATION**

(43) Date of publication:
**18.09.2024 Bulletin 2024/38**

(21) Application number: **24163897.2**

(22) Date of filing: **15.03.2024**

(51) International Patent Classification (IPC):
**H04W 28/02** *(2009.01)* **H04W 28/08** *(2023.01)*

(52) Cooperative Patent Classification (CPC):
**H04W 28/02; H04W 28/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2023 IN 202321017243
08.03.2024 US 202418600039**

(71) Applicant: **Mavenir Systems, Inc.
Richardson, TX 75081 (US)**

(72) Inventors:
• **TANEJA, Mukesh
560037 Bangalore (IN)**
• **SEN, Moushumi
560042 Bangalore (IN)**
• **KAIMALETTU, Sunil
560045 Bengaluru (IN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **OPTIMIZATIONS FOR OVERLOAD CONTROL IN O-RAN NETWORKS**

(57) A method of implementing data traffic overload control utilizing an E2 node for i) a stand-alone (SA) 4G or 5G architecture wireless network, and a non-stand-alone (NSA) architecture wireless network, the method including: detecting an overload condition at the E2 node; and performing an overload control action including: i) reducing a number of UEs for which corresponding scheduling metric is computed in each transmission time interval (TTI); ii) reducing a number of UEs for which UL grant is given; iii) reducing a size of UL grant given to each UE; (iv) reducing the amount of radio resource the E2 node provides to each cell; (v) dynamically allocating increased buffer spaces to radio link control (RLC) queues in the DU; (vi) reducing an activity factor for selected data radio bearers (DRBs); and (vii) adjusting relative data transmission rates between a 4G leg and a 5G leg of data transmission.

FIG. 1

**Description**

BACKGROUND OF THE DISCLOSURE

1. Field of the Invention

The present disclosure is related to Open Radio Access Network (O-RAN) wireless networks, and relates more particularly to optimization for overload control in O-RAN networks.

2. Description of Related Art

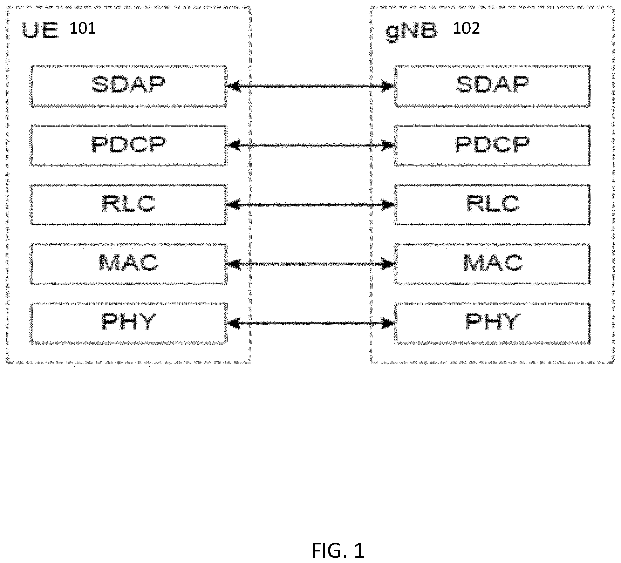

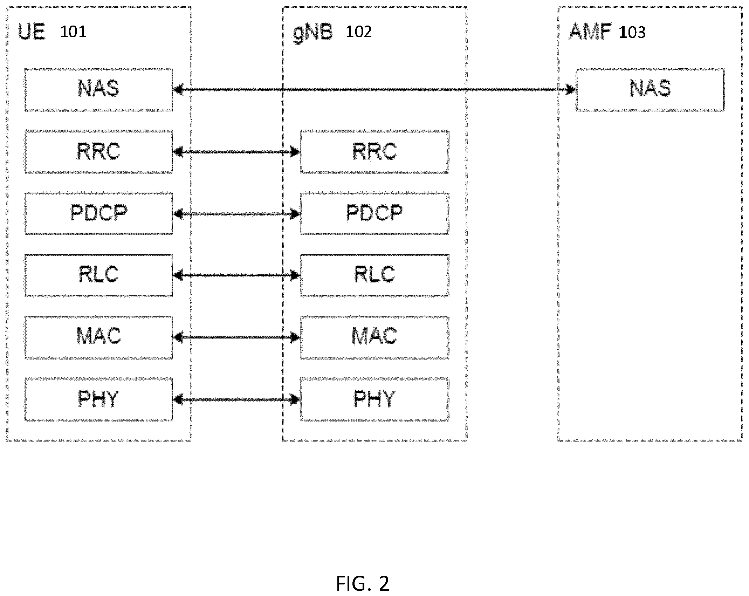

In the following sections, an overview of Next Generation Radio Access Network (NG-RAN) architecture and 5G New Radio (NR) stacks will be discussed. 5G NR (New Radio) user and control plane functions with monolithic gNB (gNodeB) are shown in FIGS. 1-2. For the user plane (shown in FIG. 1, which is in accordance with 3GPP TS 38.300), PHY (physical), MAC (Medium Access Control), RLC (Radio Link Control), PDCP (Packet Data Convergence Protocol) and SDAP (Service Data Adaptation Protocol) sublayers originate in the UE 101 and are terminated in the gNB 102 on the network side. For the control plane (shown in FIG. 2, which is in accordance with 3GPP TS 38.300), RRC (Radio Resource Control), PDCP, RLC, MAC and PHY sublayers originate in the UE 101 and are terminated in the gNB 102 on the network side, and NAS (Non-Access Stratum) originate in the UE 101 and is terminated in the AMF (Access Mobility Function) 103 on the network side.

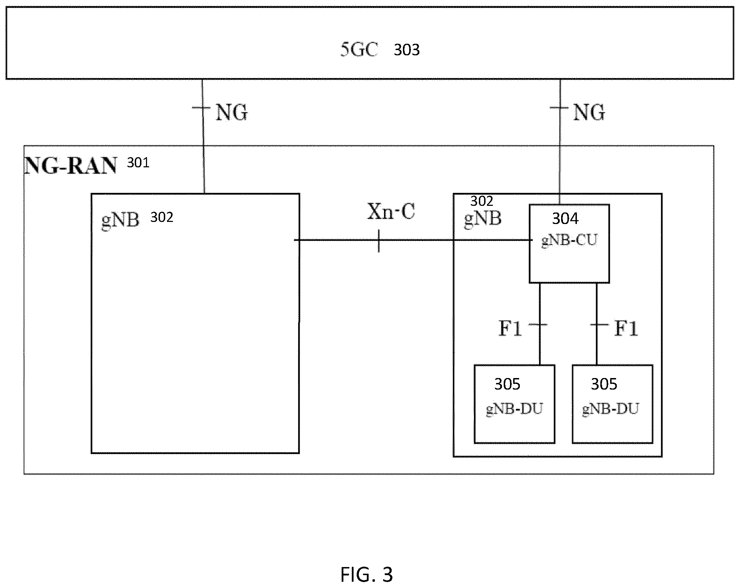

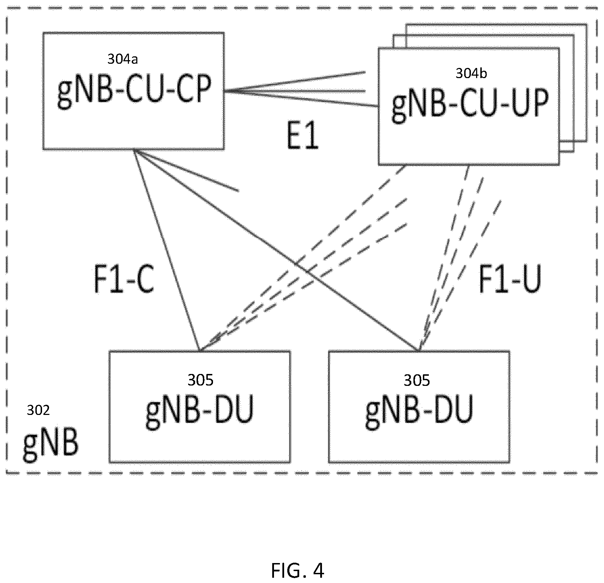

NG-Radio Access Network (NG-RAN) architecture from 3GPP TS 38.401 is shown in FIGS. 3-4. As shown in FIG. 3, the NG-RAN 301 consists of a set of gNBs 302 connected to the 5GC 303 through the NG interface. Each gNB comprises gNB-CU 304 and one or more gNB-DU 305 (see FIG. 3). As shown in FIG. 4 (which illustrates separation of CU-CP (CU-Control Plane) and CU-UP (CU-User Plane)), E1 is the interface between gNB-CU-CP (CU-Control Plane) 304a and gNB-CU-UP (CU-User Plane) 304b, F1-C is the interface between gNB-CU-CP 304a and gNB-DU 305, and F1-U is the interface between gNB-CU-UP 304b and gNB-DU 305. As shown in FIG. 4, gNB 302 can consist of a gNB-CU-CP 304a, multiple gNB-CU-Ups 304b and multiple gNB-DUs 305. One gNB-DU 305 is connected to only one gNB-CU-CP 304a, and one gNB-CU-UP 304b is connected to only one gNB-CU-CP 304a.

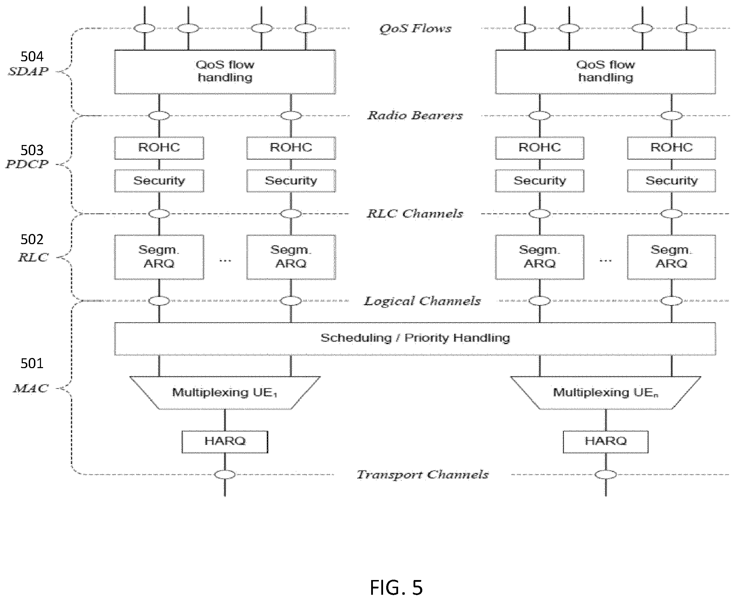

In this section, an overview of Layer 2 (L2) of 5G NR will be provided in connection with FIGS. 5-7. L2 of 5G NR is split into the following sublayers (in accordance with 3GPP TS 38.300):

1) Medium Access Control (MAC) 501 in FIGS. 5-7: The MAC sublayer offers Logical Channels (LCs) to the RLC sublayer. This layer runs a MAC scheduler to schedule radio resources across different LCs (and their associated radio bearers).

2) Radio Link Control (RLC) 502 in FIGS. 5-7: The RLC sublayer offers RLC channels to the Packet Data Convergence Protocol (PDCP) sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

3) Packet Data Convergence Protocol (PDCP) 503 in FIGS. 5-7: The PDCP sublayer offers Radio Bearers (RBs) to the SDAP sublayer. There are two types of Radio Bearers: Data Radio Bearers (DRBs) for data, and Signaling Radio Bearers (SRBs) for control plane.

4) Service Data Adaptation Protocol (SDAP) 504 in FIGS. 5-7: The SDAP offers QoS Flows to the 5GC (5G Core). This sublayer provides mapping between a QoS flow and a DRB. It marks QoS Flow Id in DL (downlink) as well as UL (uplink packets).

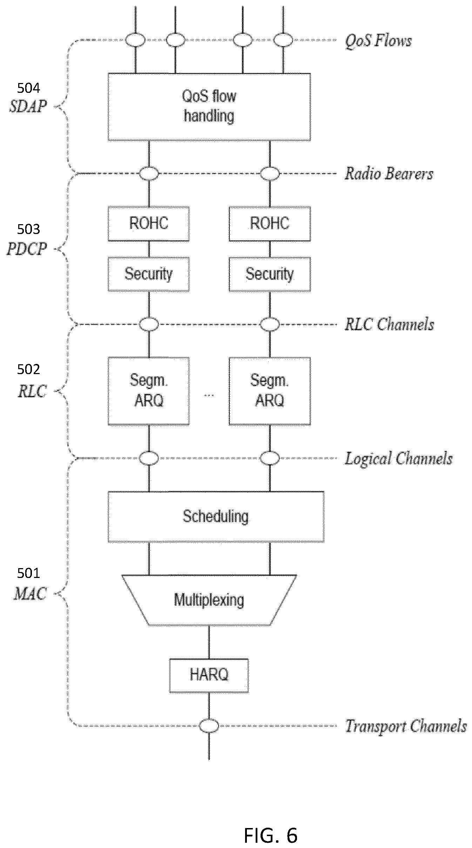

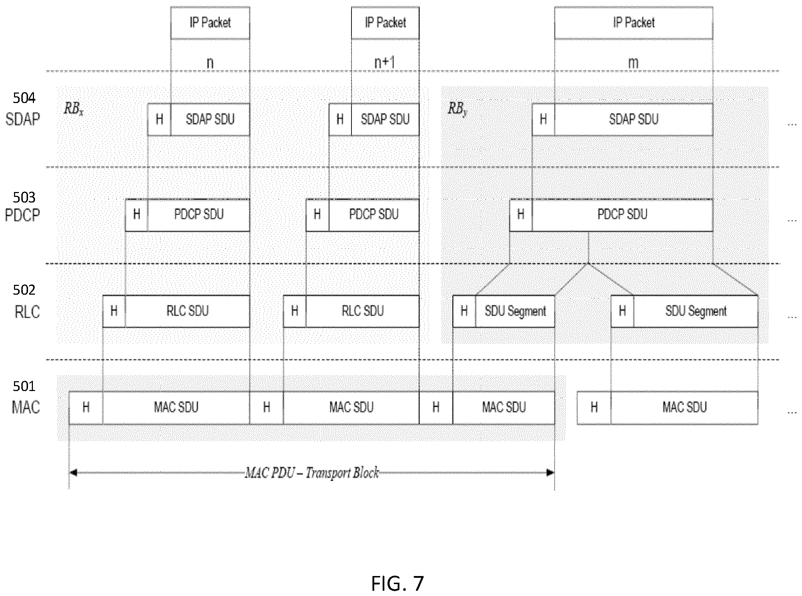

FIG. 5 is a block diagram illustrating DL L2 structure, in accordance with 3GPP TS 38.300. FIG. 6 is a block diagram illustrating UL L2 structure, in accordance with 3GPP TS 38.300. FIG. 7 is a block diagram illustrating L2 data flow example, in accordance with 3GPP TS 38.300 (in FIG. 7, H denotes headers or sub-headers).

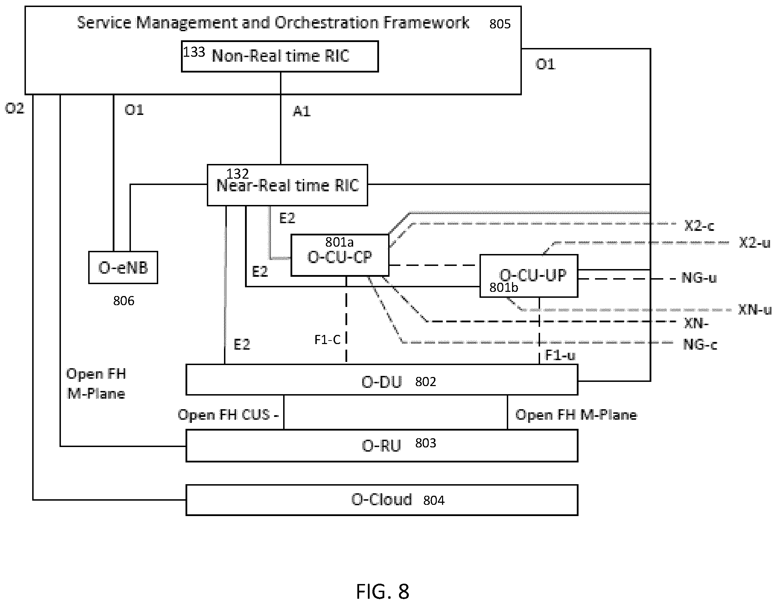

Open Radio Access Network (O-RAN) is based on disaggregated components which are connected through open and standardized interfaces based on 3GPP NG-RAN. An overview of O-RAN with disaggregated RAN CU (Centralized Unit), DU (Distributed Unit), and RU (Radio Unit), near-real-time Radio Intelligent Controller (RIC) and non-real-time RIC is illustrated in FIG. 8.

As shown in FIG. 8, the CU (shown split as O-CU-CP 801a and O-CU-UP 801b) and the DU (shown as O-DU 802) are connected using the F1 interface (with F1-C for control plane and F1-U for user plane traffic) over a mid-haul (MH) path. One DU can host multiple cells (e.g., one DU could host 24 cells) and each cell may support many users.

For example, one cell may support 600 Radio Resource Control (RRC)-connected users and out of these 600, there may be 200 Active users (i.e., users that have data to send at a given point of time).

A cell site can comprise multiple sectors, and each sector can support multiple cells. For example, one site could comprise three sectors and each sector could support eight cells (with eight cells in each sector on different frequency bands). One CU-CP (CU-Control Plane) could support multiple DUs and thus multiple cells. For example, a CU-CP could support 1,000 cells and around 100,000 User Equipments (UEs). Each UE could support multiple Data Radio Bearers (DRB) and there could be multiple instances of CU-UP (CU-User Plane) to serve these DRBs. For example, each UE could support 4 DRBs, and 400,000 DRBs (corresponding to 100,000 UEs) may be served by five CU-UP instances (and one CU-CP instance).

The DU could be located in a private data center, or it could be located at a cell-site. The CU could also be in a private data center or even hosted on a public cloud system. The DU and CU, which are typically located at different physical locations, could be tens of kilometers apart. The CU communicates with a 5G core system, which could also be hosted in the same public cloud system (or could be hosted by a different cloud provider). A RU (Radio Unit) (shown as O-RU 803 in FIG. 8) is located at a cell-site and communicates with the DU via a front-haul (FH) interface.

The E2 nodes (CU and DU) are connected to the near-real-time RIC 132 using the E2 interface. The E2 interface is used to send data (e.g., user, cell, slice KPMs) from the RAN, and deploy control actions and policies to the RAN at near-real-time RIC 132. The application or service at the near-real-time RIC 132 that deploys the control actions and policies to the RAN are called xApps. The near-real-time RIC 132 is connected to the non-real-time RIC 133 (which is shown as part of Service Management and Orchestration (SMO) Framework 805 in FIG. 8) using the A1 interface. Also shown in FIG. 8 are O-eNB 806 (which is shown as being connected to the near-real-time RIC 132 and the SMO Framework 805) and O-Cloud 804 (which is shown as being connected to the SMO Framework 805).

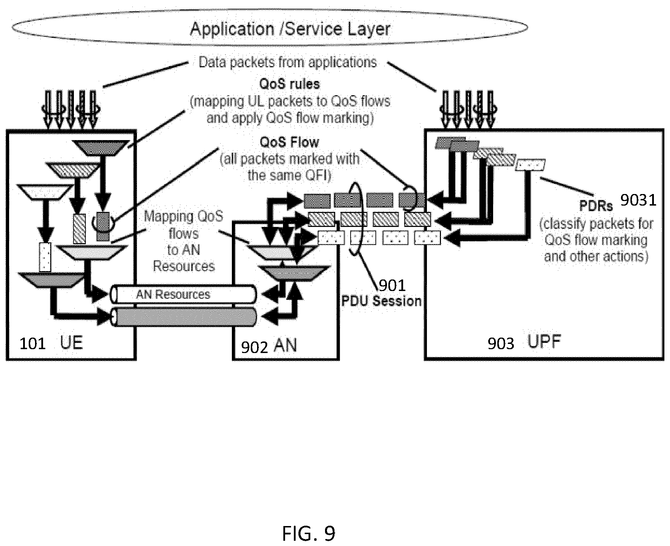

In this section, PDU sessions, DRBs, and quality of service (QoS) flows will be discussed. In 5G networks, PDU connectivity service is a service that provides exchange of PDUs between a UE and a data network identified by a Data Network Name (DNN). The PDU Connecitivity service is supported via PDU sessions that are established upon request from the UE. The DNN defines the interface to a specific external data network. One or more QoS flows can be supported in a PDU session. All the packets belonging to a specific QoS flow have the same 5QI (5G QoS Identifier). A PDU session consists of the following: Data Radio Bearer which is between UE and CU in RAN; and an NG-U GTP tunnel which is between CU and UPF (User Plane Function) in the core network. FIG. 9 illustrates an example PDU session (in accordance with 3GPP TS 23.501) consisting of multiple DRBs, where each DRB can consist of multiple QoS flows. In FIG. 9, three components are shown for the PDU session 901: UE 101; access network (AN) 902; and UPF 903, which includes Packet Detection Rules (PDRs) 9031.

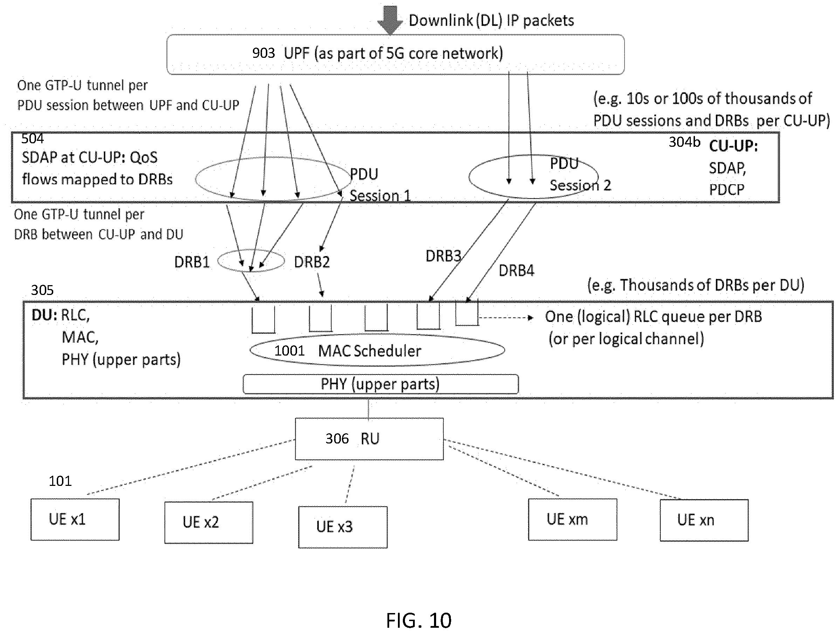

The following should be noted for 3GPP 5G network architecture, which is illustrated in FIG. 10 in the context of Radio Resource Management (RRM) (for connecting UE 101 to the network via RU 306) with a MAC Scheduler 1001:

1) The transport connection between the base station (i.e., CU-UP 304b) and the UPF 903 uses a single GTP-U tunnel per PDU session. The PDU session is identified using GTP-U TEID (Tunnel Endpoint Identifier).

2) The transport connection between the DU 305 and the CU-UP 304b uses a single GTP-U tunnel per DRB.

3) SDAP:

a) The SDAP (Service Adaptation Protocol) 504 Layer receives downlink data from the UPF 903 across the NG-U interface.

b) The SDAP 504 maps one or more QoS Flow(s) onto a specific DRB.

c) The SDAP header is present between the UE 101 and the CU (when reflective QoS is enabled), and includes a field to identify the QoS flow within a specific PDU session.

4) User plane (UP) protocol includes a field to identify the QoS flow and is present between CU and UPF 903 (in the core network).

5) One (logical) RLC queue is implemented per DRB (or per logical channel), as shown in FIG. 10.

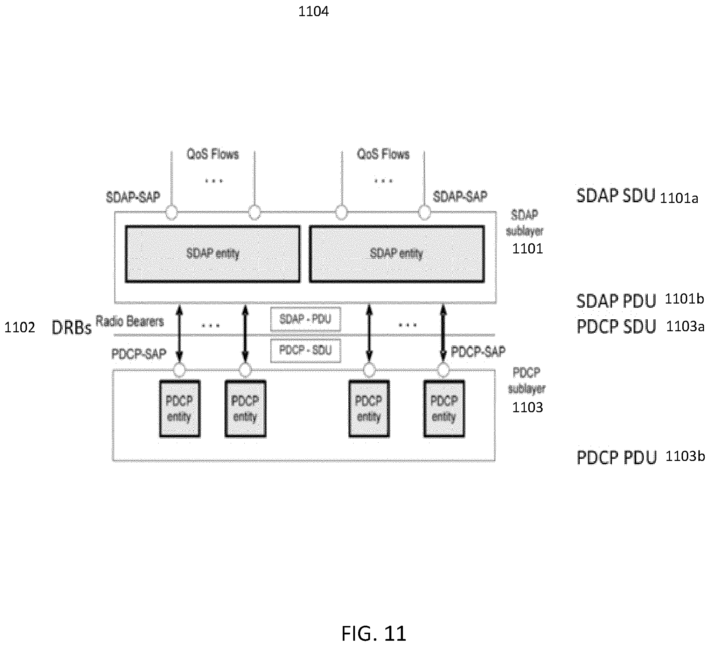

FIG. 11 illustrates the SDAP sub-layer 1101, which is to map QoS flows to and from DRBs at the PDCP sub-layer 1103 (which can have multiple SDAP entities) in both downlink (DL) and uplink (UL) directions, as per 3GPP 37.324. The data coming from top of the SDAP sub-layer 1101 is called SDAP Service Date Unit (SDU), referenced by 1101a, and the SDAP packet along with the header is called SDAP Protocol Datau Unit (PDU), referenced by 1101b.

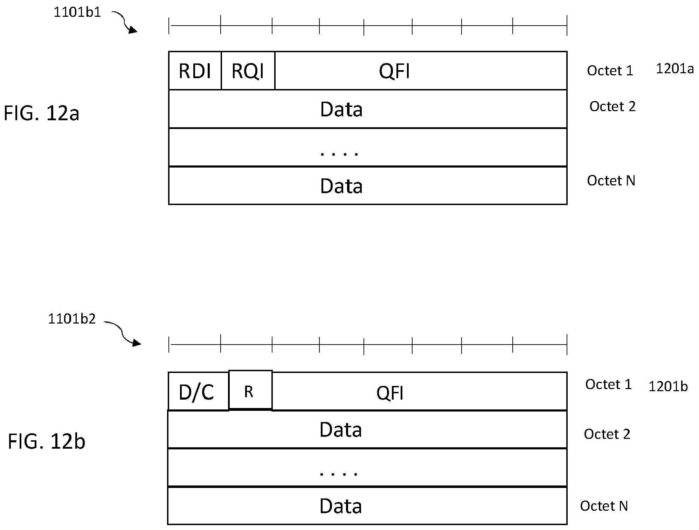

Illustrated on the PDCP sub-layer side are PDCP SDU 1103a and PDCP PDU 1103b. FIG. 12a shows the structure of downlink (DL) SDAP data PDU 1101b1 with SDAP header 1201a (as per 3GPP TS 37.324), which DL SDAP header includes a 1-bit Reflective QoS flow to DRB mapping Indication (RDI), a 1-bit Reflective QoS Indication (RQI), and a 6-bit QoS Flow ID (QFI). FIG. 12b shows the structure of uplink (UL) SDAP data PDU 1101b2 with SDAP header 1201b (as per 3GPP TS 37.324), which UL SDAP header includes a 1-bit Data/Control (D/C) field (which, when set to 1, indicates data PDU), a 1-bit R field which is reserved, and a 6-bit QFI.

In this section, standardized 5QI to QoS characteristics mapping will be discussed. As per 3GPP TS 23.501, the one-to-one mapping of standardized 5QI values to 5G QoS characteristics is specified in Table 1 shown below. The first column represents the 5QI value. The second column lists the different resource types, i.e., as one of Non-GBR, GBR, Delay-critical GBR. The third column ("Default Priority Level") represents the priority level Priority5QI, for which lower the value the higher the priority of the corresponding QoS flow. The fourth column represents the Packet Delay Budget (PDB), which defines an upper bound for the time that a packet may be delayed between the UE and the N6 termination point at the UPF. The fifth column represents the Packet Error Rate (PER). The sixth column represents the maximimum data burst volume for delay-critical GBR types. The seventh column represents averaging window for GBR, delay critical GBR types.

For example, as shown in Table 1, 5QI value 1 is of resource type GBR with the default priority value of 20, PDB of 100ms, PER of 0.01, and averaging window of 2000 ms. Conversational voice falls under this catogery. Similarly, as shown in Table 1, 5QI value 7 is of resource type Non-GBR with the default priority value of 70, PDB of 100ms and PER of 0.001. Voice, video (live streaming), and interactive gaming fall under this category.

Table 1

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR (NOTE 1) | 20 | 100 ms (NOTE 11, NOTE 13) | $10^{-2}$ | N/A | 2000 ms | Conversational Voice |
| 2 | | 40 | 150 ms (NOTE 11, NOTE 13) | $10^{-3}$ | N/A | 2000 ms | Conversational Video (Live Streaming) |
| 3 | | 30 | 50 ms (NOTE 11, NOTE 13) | $10^{-3}$ | N/A | 2000 ms | Real Time Gaming, V2X messages (see TS 23.287 [121]). Electricity distribution - medium voltage, Process automation monitoring |
| 4 | | 50 | 300 ms (NOTE 11, NOTE 13) | $10^{-6}$ | N/A | 2000 ms | Non-Conversational Video (Buffered Streaming) |
| 65 (NOTE 9, NOTE 12) | | 7 | 75 ms (NOTE 7, NOTE 8) | $10^{-2}$ | N/A | 2000 ms | Mission Critical user plane Push To Talk voice (e.g., MCPTT) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 66 (NOTE 12) | | 20 | 100 ms (NOTE 10, NOTE 13) | $10^{-2}$ | N/A | 2000 ms | Non-Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |
| 75 (NOTE 14) | | | | | | | |
| 71 | | 56 | 150 ms (NOTE 11, NOTE 13, NOTE 15) | $10^{-6}$ | N/A | 2000 ms | "Live" Uplink Streaming (e.g. TS 26.238 [76]) |
| 72 | | 56 | 300 ms (NOTE 11, NOTE 13, NOTE 15) | $10^{-4}$ | N/A | 2000 ms | "Live" Uplink Streaming (e.g. TS 26 238 [76]) |
| 73 | | 56 | 300 ms (NOTE 11, NOTE 13, NOTE 15) | $10^{-8}$ | N/A | 2000 ms | "Live" Uplink Streaming (e.g. TS 26.238 [76]) |
| 74 | | 56 | 500 ms (NOTE 11, NOTE 15) | $10^{-S}$ | N/A | 2000 ms | "Live" Uplink Streaming (e.g. TS 26.238 [76]) |
| 76 | | 56 | 500 ms (NOTE 11, NOTE 13, NOTE 15) | $10^{-4}$ | N/A | 2000 ms | "Live" Uplink Streaming (e.g. TS 26 238 [76]) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc.) |
| 7 | | 70 | 100 ms (NOTE 10, NOTE 13) | $10^{-3}$ | N/A | N/A | Voice, Video (Live Streaming) Interactive Gaming |

In this section, Radio Resource Management (RRM) will be discussed (a block diagram for an example RRM with a MAC Scheduler is shown in FIG. 10). L2 methods (such as MAC scheduler) play a critical role in allocating radio resources to different UEs in a cellular network.

The scheduling priority of a UE, i.e., $P_{UE}$, is determined as part of MAC scheduler as follows:

$$P_{UE} = W_{5QI}*P_{5QI} + W_{GBR}*P_{GBR} + W_{PDB}*P_{PDB}^{DU} + W_{PF}*P_{PF}$$

In the above expression, the parameters are defined as follows:

a) $P_{5QI}$ is the priority metric corresponding to the QoS class (5QI) of the logical channel. Incoming traffic from a DRB is mapped to Logical Channel (LC) at RLC level. $P_{5QI}$ is a function of the default SQI priority value, $Priority_{5QI}$, of a QoS flow that is mapped to the current LC. The lower the value of $Priority_{5QI}$ the higher the priority of the corresponding QoS flow. For example, Voice over New Radio (VoNR) (with SQI of 1) will have a much higher $P_{5QI}$ compared to web browsing (with SQI of 9).

b) $P_{GBR}$ is the priority metric corresponding to the target bit rate of the corresponding logical channel. The GBR metric $P_{GBR}$ represents the fraction of data that must be delivered to the UE within the time left in the current averaging window $T_{avg\_win}$ (as per SQI table, default is 2000 msec.) to meet the UE's GBR requirement. $P_{GBR}$ is calculated as follows:

$$P_{GBR} = remData/targetData$$

where

*targetData* is the total data bits to be served in each averaging window $T_{avg\_win}$ in order to meet the GFBR of the given QoS flow;

*remData* is the amount of data bits remaining to be served within the time left in the current averaging window;

$Priority_{GBR}$ is reset to 1 at the start of each averaging window $T_{avg\_win}$, and should go down to 0 towards the end of this window if the GBR criterion is met; and

Priority$_{GBR}$ = 0 for non-GBR flows.

c) $P_{PDB}^{DU}$ is the priority metric corresponding to the packet delay budget at DU (i.e., PDB$^{DU}$). $P_{PDB}^{DU} = 1$ if PDB$^{DU}$ <=QDelay$_{RLC}$ and $P_{PDB}^{DU} = 1 / (P_{PDB}^{DU} - QDelay_{RLC})$ if PDB$^{DU}$ > QDelay$_{RLC}$ where both PDB$^{DU}$ (Packet Delay Budget at DU) and RLC Queuing delay, QDelay$_{RLC}$, are measured in terms of slots. QDelay$_{RLC}$ = (t -T$_{RLC}$) is the delay of the oldest RLC packet in the QoS flow that has not been scheduled yet, and it is calculated as the difference in time between the service data unit (SDU) insertion in RLC queue to current time where t := current time instant, T$_{RLC}$ := time instant when oldest SDU was inserted in RLC.

d) P$_{PF}$ is the priority metric corresponding to proportional fair (PF) metric of the UE. P$_{PF}$ is the classical PF Metric, calculated on a per UE basis as P$_{PF}$ = r / R$_{avg}$,
where

   r: UE spectral efficiency calculated based on one RB & it's last reported CQI; and

   R$_{avg}$ = a.R$_{avg}$ + (1-a).b , UE's average throughput, where b>=0 is the number of bits scheduled in current transmission time interval (TTI) and 0 < a <= 1 is the infinite impulse response (IIR) filter coefficient.

e) In addition, the following weights are defined: 1) W$_{5QI}$ is the weight of P$_{5QI}$; 2) W$_{GBR}$ is the weight of P$_{GBR}$; 3) W$_{PDB}$ is the weight of P$_{PDB}$; and 4) W$_{PF}$ is the weight of P$_{PF}$. Each of the above weights is set to a value between 0 and 1.

In another example variant, the scheduling priority of a UE is determined as follows:

$$P_{UE} = W_{5QI}*P_{5QI} + \text{maximum}(W_{GBR}*P_{GBR} + W_{PDB}*P_{PDB}^{DU}) + W_{PF}*P_{PF}.$$

In yet another example variant, the scheduling priority of a UE is determined as follows:

$$P_{UE} = (W_{5QI}*P_{5QI} + W_{PF}*P_{PF}) * \text{maximum}(W_{GBR}*P_{GBR} + W_{PDB}*P_{PDB}^{DU}).$$

The scheduling priority of a UE is based on the maximum logical channel priority value across the logical channels (LCs) of the UE, and the resources allocated to a UE are based on this maximum logical channel priority.
In this section, flow control between the CU-UP and the DU will be discussed. The F1-U interface, for which the associated procedures and functionality are defined in 3GPP TS 38.425, supports NR User Plane (NR UP) protocol which provides support for flow control and reliability between CU-UP and DU for each DRB. Three types of PDU are supported by NR-UP:

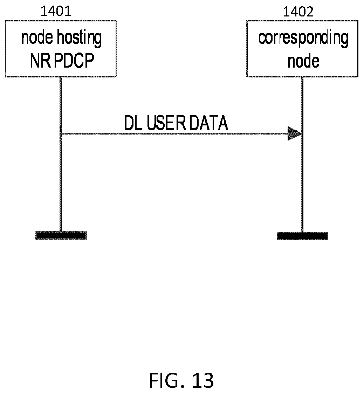

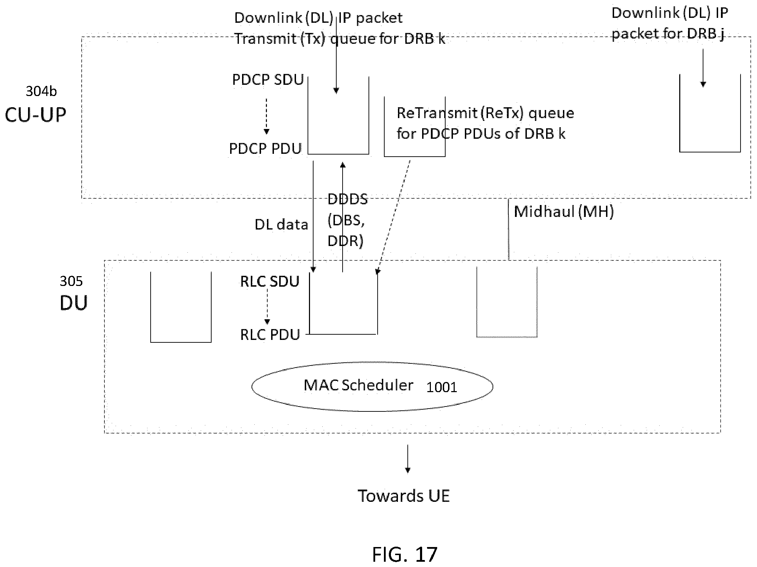

   1) Downlink User Data (DUD) PDU from CU-UP to DU (see, e.g., FIGS. 13 and 17): These PDUs are used to carry PDCP PDUs from CU-UP to DU for each DRB.

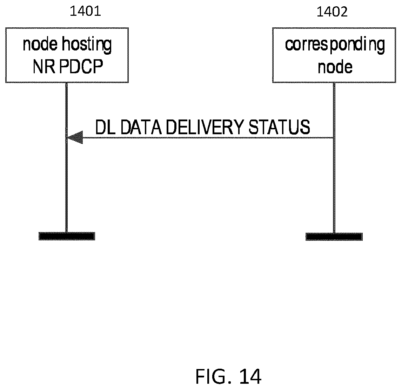

   2) Downlink Data Delivery Status (DDDS) PDU from DU to CU-UP (as shown, e.g., in FIGS. 14, 16 and 17):

      a. The DDDS message conveys Desired Buffer Size (DBS), Desired Data Rate (DDR), and some other parameters from DU to CU-UP for each DRB as part of flow control feedback. If the value of the DBS is zero for a particular DRB, the NR PDCP hosting node (i.e., the CU-UP) shall stop sending data for that particular DRB from the CU-UP to the DU. If the value of the DBS is greater than zero for a particular DRB, the NR PDCP hosting node (i.e., the CU-UP) can send up to this amount of data for that particular DRB. The value of DDR is the amount of data desired to be received every second by the DU (from CU-UP) for that particular DRB.

      b. The corresponding node (i.e., DU) can also transfer uplink data from the DU to the CU-UP for the relevant DRB along with the DDDS frame in the same GTP-U tunnel.

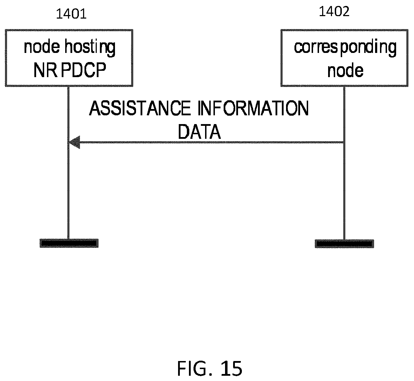

   3) Transfer of (Radio) Assistance Information (TAI) PDU from DU to CU-UP (see, e.g., FIG. 15).

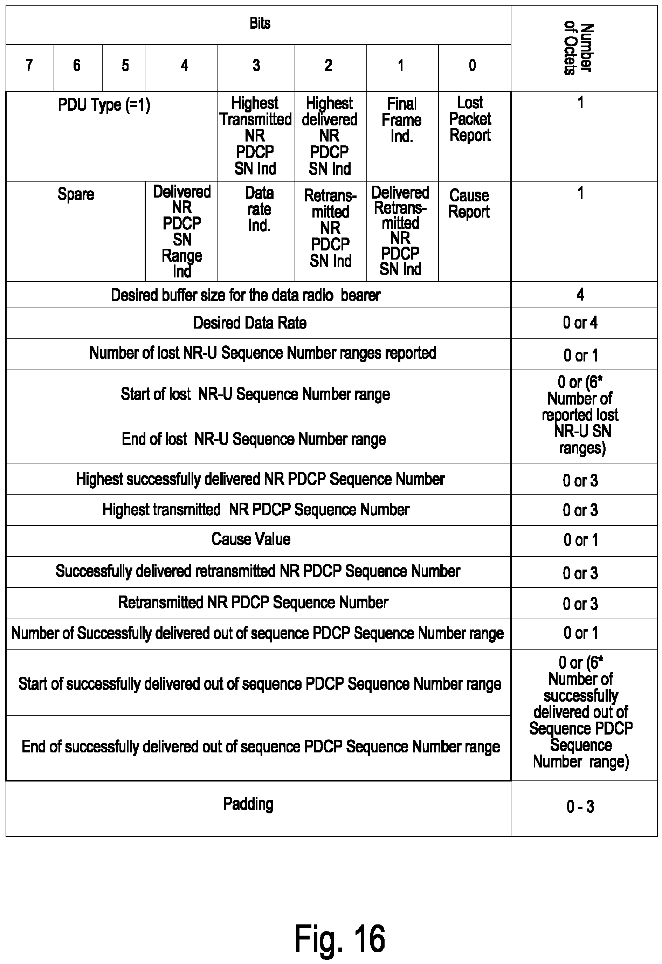

FIG. 13 shows DL User data (i.e., PDCP PDUs) being sent from the node hosting NR PDCP 1401 (i.e., CU-UP) to RLC SDU queues at the corresponding node 1402 (i.e., DU). FIG. 14 shows DL Data Delivery Status (DDDS) flow control feedback from the corresponding node 1402 (i.e., DU) to the node hosting NRPDCP 1401 (i.e., CU-UP) for each DRB. FIG. 15 shows transfer of radio assistance information data from the corresponding node 1402 (i.e., DU) to the node hosting NR PDCP 1401 (i.e., CU-UP). FIG. 16 shows the structure of the DDDS message sent from the corresponding node 1402 (i.e., DU) to the node hosting NR PDCP 1401 (i.e., CU-UP). FIG. 17 illustrates the flow of DL data and DDDS flow control feedback over the midhaul between CU-UP 304b and DU 305 in a 5G network, as well as illustrating the MAC Scheduler 1001 (which is implemented at the DU 305 in FIG. 17 and performs resource allocation in a 5G network).

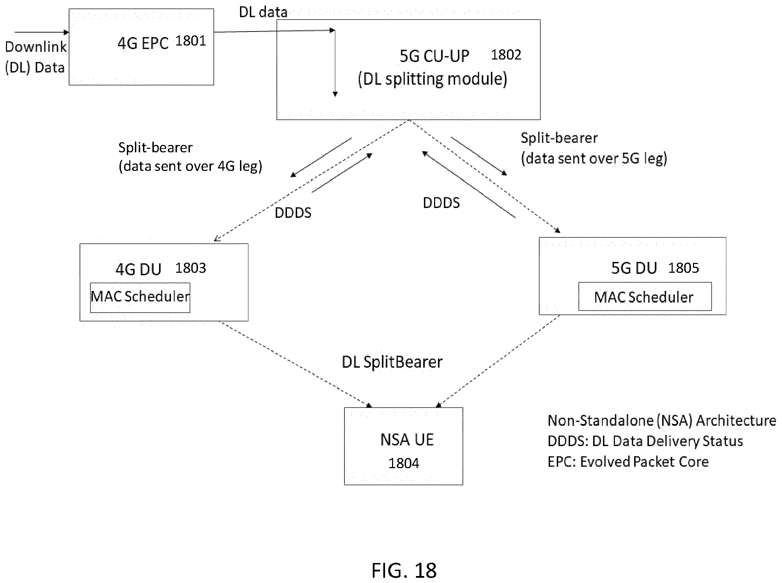

In this section, non-stand-alone (NSA) architecture will be discussed in conjunction with FIG. 18. In the 5G stand-alone (SA) architectures, a 5G gNB communicates with 5G Core (and not with 4G Evolved Packet Core). Similarly, in the 4G architecture, a 4G eNB communicates with 4G Evolved Packet Core (EPC) and not with 5G Core. E-UTRA-NR Dual Connectivity (EN-DC), which is a dominant form of the non-stand-alone (NSA) architecture, is shown in FIG. 18. In the architecture shown in FIG. 18, the following can be seen:

i) 4G eNB as well as 5G gNB use 4G EPC 1801, and 5G Core is not used.

ii) In the architecture shown in FIG. 18, DL (downlink) data goes from 4G EPC 1801 to 5G CU-UP 1802, where it can be split across two different transmission paths (or network legs): 1) 5G CU-UP 1802 to 4G DU 1803, then to NSA UE 1804; and 2) 5G CU-UP 1802 to 5GDU 1805, then to NSA UE 1804, and the DL data of the two transmission paths are combined at the NSA UE 1804. Flow control between CU-UP and DU as specified in the previous section is run 1) between 5GDU 1805 and 5G CU-UP 1802, and 2) between 4G DU 1803 and 5G CU-UP 1802, which flow control involves DDDS.

In a variant of the NSA architecture, DL data from 4G EPC is first sent to 4G CU-UP, where the DL data is split across two transmission paths (or network legs): 1) 4G CU-UP to 4G DU, then to NSA UE; and 2) 4G CU-UP to 5G DU, then to NSA UE, and the DL data of the two transmission paths are combined at the NSA UE.

DU and CU can be overloaded in stand-alone (SA) 4G/5G and non-stand-alone (NSA) architectures, and this can result in undesirable system behavior. For example, the MAC scheduler at the DU needs to compute scheduling metric for active users and select certain number of active users to serve every TTI (Transmission Time Interval) for the downlink as well as the uplink direction for each cell in a DU. Each TTI is of short duration such as 1 ms for 15 KHz SCS (SubCarrier Spacing) 5G systems, 0.5 ms for 30 KHz SCS and it keeps reducing as SCS increases to higher values. As the number of Data Radio Bearers (DRBs) increases in the system, the processing overhead also goes up, and it is not always feasible to do resource allocation using typical methods (such as the above enhanced proportional fair way of resource allocation) for a given base station system. If DU L2 (Layer 2) is not able to do its required processing every TTI, it results in an overload condition, called TTI-overstretch, and this can result in undesirable system behavior.

Similarly, CU-UP can be overloaded in the O-RAN architecture. For example, some of the PDCP queues can become full and start dropping packets. This can also result in degradation of end-to-end throughput for applications running over TCP type of protocols.

Accordingly, there is a need for an enhanced system and method to effectively control overload situations in the O-RAN networks.

SUMMARY

Accordingly, what is desired is a system and method to effectively control overload situations in the O-RAN networks.

According to an example embodiment, DL and UL overload control optimizations are implemented at the DU for stand-alone (SA) 4G/5G and non-stand-alone (NSA) architectures.

According to an example embodiment, instead of computing the scheduling metric for every active UE (or logical channel) in each slot (or TTI), i) scheduling metric is computed for a subset of UEs in each slot, and ii) at the same time, scheduling metric is computed for each active UE once in a window of length W slots.

According to an example embodiment, the DU implements a DL overload control action including a change in at least one of a desired buffer size (DBS) and a desired data rate (DDR) which is sent as part of DL Data Delivery Status (DDDS) message from the DU to a centralized unit user plane (CU-UP) for each selected DRB.

According to an example embodiment, DL and UL overload control optimizations for stand-alone (SA) 4G/5G and non-stand-alone (NSA) architectures are implemented at the DU based on the overload analysis performed at a near-RT RIC.

According to an example embodiment, various network parameters including processing load, number of active UEs, PRB utilization, etc., are communicated from the DU to the near-RT RIC, which analyzes the received parameters to detect an overload condition.

According to an example embodiment, the overload control action includes computing scheduling metrics for only a subset of UEs among active UEs in each TTI within a time window of W number of TTIs, wherein W > 1, and wherein the scheduling metric for each active UE is computed only once within the time window of W number of TTIs.

According to an example embodiment, DL and UL overload control optimizations for stand-alone (SA) 4G/5G and non-stand-alone (NSA) architectures are implemented at the CU-UP based on the overload analysis performed at a near-RT RIC.

According to an example embodiment, various network parameters including processing load, number of active UEs, PRB utilization, etc., are communicated from the CU-UP to the near-RT RIC, which analyzes the received parameters to detect an overload condition.

According to an example embodiment, the overload control action includes instructing, by the near-RT RIC to the DU, to one of i) dynamically allocate more buffer space to the corresponding RLC queues in the DU, or ii) adjust scheduler weights to give higher preference to the corresponding DRBs.

According to an example embodiment, DL and UL overload control optimizations are implemented at the CU-UP for stand-alone (SA) 4G/5G and non-stand-alone (NSA) architectures.

According to an example embodiment, the overload control action includes instructing, by the CU-UP to the DU, to one of i) dynamically allocate more buffer space to the corresponding RLC queues in the DU, or ii) adjust scheduler weights to give higher preference to the corresponding DRBs.

According to an example method, overload control optimizations are implemented for non-stand-alone (NSA) architectures using the DU.

According to an example method, overload control optimizations are implemented for non-stand-alone (NSA) architectures at the DU based on the overload analysis performed at a near-RT RIC.

According to an example embodiment, in the case of the NSA architecture wireless network, the overload control action includes adjusting relative data transmission rates between a 4G leg of data transmission and a 5G leg of data transmission to a served UE.

For this application the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

DESCRIPTION OF THE DRAWINGS

FIG. 1 is a block diagram illustrating the user plane stack of 5GNR.

FIG. 2 is a block diagram illustrating the control plane stack of 5GNR.

FIG. 3 is a block diagram illustrating NG-RAN architecture.

FIG. 4 is a block diagram illustrating separation of CU-CP and CU-UP in NG-RAN architecture.

FIG. 5 is a block diagram illustrating DL L2 structure.

FIG. 6 is a block diagram illustrating UL L2 structure.

FIG. 7 is a block diagram illustrating L2 data flow example.

FIG. 8 illustrates an overview of O-RAN architecture.

FIG. 9 is a block diagram illustrating an example PDU session consisting of multiple DRBs, each DRB consisting of one or more QoS flows.

FIG. 10 illustrates 5G network architecture in the context of Radio Resource Management (RRM) with a MAC Scheduler.

FIG. 11 illustrates the SDAP sub-layer, which is to map QoS flows to and from DRBs at the PDCP sub-layer.

FIG. 12a shows the structure of downlink (DL) SDAP data PDU with SDAP header.

FIG. 12b shows the structure of uplink (UL) SDAP data PDU with SDAP header.

FIG. 13 shows DL User data being sent from the node hosting NR PDCP to RLC SDU queues at the corresponding node.

FIG. 14 shows DL Data Delivery Status (DDDS) flow control feedback from the corresponding node to the node hosting NR PDCP for each DRB.

FIG. 15 shows transfer of radio assistance information data from the corresponding node to the node hosting NR PDCP.

FIG. 16 shows the structure of the DDDS message sent from the corresponding node to the node hosting NR PDCP.

FIG. 17 illustrates the flow of DL data and DDDS flow control feedback over the mid-haul between CU-UP and DU in a 5G network,

FIG. 18 shows non-stand-alone (NSA) architecture.

FIG. 19 is a signal flow diagram of E2AP SUBSCRIPTION procedure utilized for overload optimization using an RIC in conjunction with a DU.

FIG. 20 illustrates a signal flow diagram of an example embodiment of a method for overload optimization at the DU, based on analysis of various parameters performed at a near-RT RIC.

FIG. 21 is a signal flow diagram of E2AP SUBSCRIPTION procedure utilized for overload optimization using an RIC in conjunction with a CU-UP.

FIG. 22 illustrates a signal flow diagram of an example embodiment of a method for overload optimization at the CU-UP, based on analysis of various parameters performed at the near-RTRIC.

FIG. 23 illustrates overload control optimization at the 5G DU or 4G DU within the NSA architecture.

FIG. 24 illustrates the structure of an enhanced DDDS message including a "DU overload extension".

DETAILED DESCRIPTION

According to an example embodiment of the method according to the present disclosure, DL and UL overload control optimizations are implemented at the DU for stand-alone (SA) 4G/5G and non-stand-alone (NSA) architectures. An L2 scheduler needs to compute the scheduling metric and select certain number of active users to serve every Transmission Time Interval (TTI) for the downlink as well as the uplink direction for each cell in a DU. As the number of Data Radio Bearers (DRBs) or the associated Logical Channels (LCs) increases in a given base station system, the processing overhead increases (e.g., reaches an overload condition) and it is not always feasible to do resource allocation using conventional methods for the given base station system.

According to an example embodiment, in the case of an overload condition (or phase), instead of computing the scheduling metric for every active UE (or logical channel) in each slot (or TTI), i) scheduling metric is computed for a subset of UEs in each slot, and ii) at the same time, scheduling metric is computed for each active UE once in a window of length having W slots. For example, if we have two hundred active UEs, we can use a window length of four slots and compute the scheduling metric for fifty active UEs in every slot. This subset of users for each slot is selected using selected policies. In one such policy, we consider UEs running delay-sensitive applications (e.g., video conferencing) and divide these UEs substantially equally in each slot in the above-described window of W slots, W > 1 (e.g., 4 in the example), for the purpose of updating scheduling metric during overload conditions. In the slot (TTI) m of this window, we can update the scheduling metric for those delay-sensitive applications whose RLC packets have been in the DU's RLC queues for longer (or at least equal) duration compared to the UEs in the subsequent slot (m+1). In this manner, in addition to reducing the number of UEs for which we compute the scheduling metric in every slot, we also reduce the number of UEs that are selected to schedule in each slot, thereby helping to reduce the processing overhead during the overload phase.

In the above example of a window having a length W of 4 slots and 200 active UEs, let's assume the MAC scheduler serves the UEs in the following manner: UE u5 is served in slot 1 of the window; two UEs, u65 and u67, are served in slot 2; three UEs, u129, u130 and u131, are served in slot 3; and UE u178 is served in slot 4. Each active UE will be served once or not served at all in each window having a length of W slots, e.g., as u5 was served in the first slot of the window, u5 can't be served in the slots 2,3 and 4 of the window, but u5 can be served in the next window if selected by the scheduler.

In addition to the already active UEs, new UEs may also become active during the above window of length W. If the window of length W is smaller than a specified minimum threshold, W_min_thresh, we start computing the scheduling metric of these newly added UEs in the next window, but otherwise, the following can be performed:

i) As new UEs becomes active during a given window, the workload of servicing these newly added active UEs is uniformly distributed in the remaining slots in that given window, if the number of newly added active UEs is below a specified threshold. In this case, the scheduling metric of a newly added UE is computed in one of the remaining slots in that window, and the scheduler subsequently decides whether or not to select this UE for scheduling in that particular slot.

ii) In an alternative technique, a specified metric, M, is continually updated until a specified threshold, M_max, is reached. The metric M is equal to the sum of the products of (number of newly added active UEs in a TTI slot in a given window of length W) and (remaining TTI slots in that window) for all slots in the given window up to the particular slot for which M is being calculated. As an example, let's assume a window length W=4 slots and $n_k$ number of new active UEs are added in the kth slot of this window (with k=1,2,3,4). In this case, the metric M is equal to $(n_1) \cdot (3)$ in the first slot; (m)-(3) + $(n_2)(2)$ in the second slot; (m)-(3) + $(n_2) \cdot (2)$ + $(n_3) \cdot (1)$ in the third slot; and $(n_1) \cdot (3)$ + $(n_2) \cdot (2)$ + $(n_3) \cdot (1)$ + $(n_4) \cdot (0)$ in the fourth slot. The number of newly added active UEs in this window of length W=4 is $n_1 + n_2 + n_3 + n_4$. We keep computing the scheduling metric of newly added active UEs as long as the value of the metric M stays below the specified threshold, M_max. For example, we compute the scheduling metric of $n_1$ newly added active UEs in the remaining slots if $(n_1) \cdot (3) <$ M_max. If $(n_1) \cdot (3)$ + $(n_2) \cdot (2)$ is greater than M_max but $(n_1) \cdot (3) <$ M_max, we compute the scheduling metric of $n_1$ newly added active UEs in that window and not for $n_2$ UEs which became active in the second slot in that window.

In some scenarios, UEs can send a large number of small size packets at a high packets-per-second rate, and it may not be always feasible for DU to process these packets, thereby necessitating UL overload control optimization, e.g., at the DU. In the present example embodiment, the CPU load for DU processors for handling layer 2 (and related) mechanisms is monitored to determine whether the CPU load exceeds a specified threshold, in which case i) the number of UEs for which UL grant is given is reduced, and ii) the size of the uplink grant given to each UE is reduced.

According to an alternative example embodiment, the number of UL packets received at the DU from each active UE in every slot is counted to determine whether this aggregate number (i.e., the sum across all UEs which are sending UL data to this DU) exceeds a specified threshold and stays above the threshold for a specified period of time, in which case i) the number of UEs for which UL grant is given is reduced, and ii) the size of the uplink grant given to each UE is reduced.

In some scenarios, application servers can keep transmitting a large number of small-size packets at a very high packet sending rate. At the User Plane Function (UPF) in the core network, traffic policing (or shaping) can be performed, but that may be happening on the basis of data rate (e.g., in Mbps or Gbps) but not in terms of number of packets per second. If these large number of small size packets reach the DU at a very high input packet rate, the DU may not have the hardware and/or software resources to process these packets, thereby necessitating DL overload control optimization, e.g., at the DU. In the present example embodiment, the processing load (or DL packet rate in terms of packets per second) at DU can be monitored to determine whether the processing load (or DL packet rate) exceeds a specified threshold, in which case the Desired Buffer Size (DBS) and/or Desired Data Rate (DDR) which is sent as part of DDDS (DL Data Delivery Status) message from DU to CU-UP for each selected DRB is changed. In one variant, a reduced value of DBS is sent (as part of DDDS message) for selected DRBs from DU to CU-UP. In another variant, a reduced Desired Data Rate which is sent from DU to CU-UP as part of DDDS for selected DRBs is implemented. These reductions help to keep the packets at CU-UP somewhat longer (or to drop some such excess packets at CU-UP if needed), thereby helping to manage the overload situation at DU.

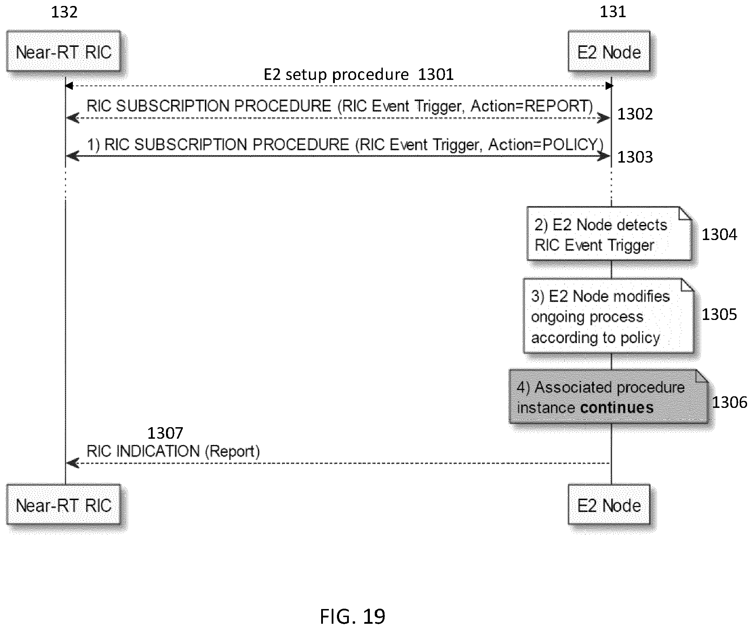

According to an example embodiment, DL and UL overload control optimizations for stand-alone (SA) 4G/5G and non-stand-alone (NSA) architectures are implemented at the DU based on the overload analysis performed at a near-RT RIC. In this example embodiment, the near-RT RIC subscribes to the following parameters (e.g., performance measures) from the DU (as explained below in further detail in connection with FIG. 19):

1) DU processing load for downlink (DL) traffic (considering multiple processors available in the DU server).

2) DU processing load for uplink (UL) traffic (considering multiple processors available in the DU server).

3) Number of active users.

4) DL PRB utilization.

5) UL PRB utilization.

6) Percentage of DRBs associated with each 5QI.

7) Channel condition measures for UEs in each cell (supported by that DU).

8) Number of DL packets (RLC SDUs) input to DU from CU-UP.

9) Number of UL packets input to DU from all the UEs supported by that DU.

10) Activity factor for each DRB.

11) Statistics related to QoS performance of different DRBs from the DU, e.g., waiting time in RLC queues along with SQI of that DRB, throughput violations for GBR (Guaranteed Bit Rate) DRBs, and packet error rate.

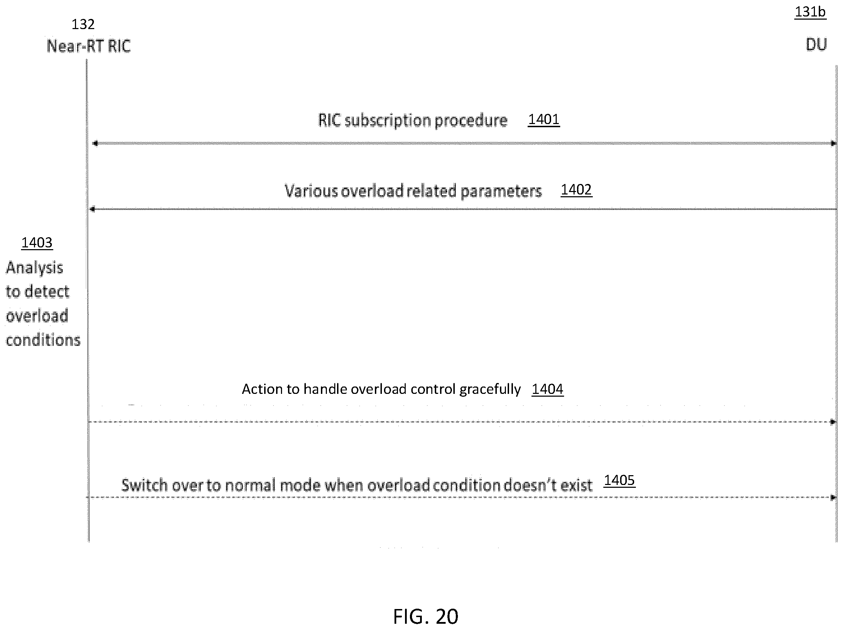

The above-listed parameters are measured or computed every measurement interval T and communicated from the E2 Node 131 (DU in this example) to the near-RT-RIC 132 (e.g., as shown in FIG. 19). Alternatively, these parameters can be communicated to the near-RT RIC 132 based on some events (e.g., sending these parameters from the DU to the near-RT-RIC when the processing load in DL or UL direction exceeds a specified threshold). One or more of these parameters are analyzed at the near-RT-RIC to detect an overload condition (e.g., as explained in connection with FIG. 20). According to an example embodiment, the network operator can specify its own policies at the near-RT RIC and these are also used as part of the decision making, as explained in further detail below.

As shown in FIG. 19, which is a signal flow diagram of E2AP SUBSCRIPTION procedure utilized for overload optimization using an RIC in conjunction with a DU, the example method starts with an E2 setup procedure 1301 between the E2 Node 131 (which is DU in this example) and the near-RT RIC 132, which E2 setup procedure is as specified in the O-RAN and 3GPP specifications. The next step involves the RIC subscription procedure including a sequence of actions: i) Near-RT RIC requests a SUBSCRIPTION from the E2 Node 131 for action type REPORT, with the corresponding Event Trigger (e.g., periodic trigger, or processing load in DL or UL exceeds a specified threshold), and the E2 Node 131 acknowledges the SUBSCRIPTION (generally referenced by the process arrow 1302); and ii) Near-RT RIC requests a SUBSCRIPTION from the E2 Node 131 for action type POLICY, where it provides the POLICY (for overload management) to apply at the E2 node, with the corresponding Event Trigger , and the E2 Node 131 acknowledges the SUBSCRIPTION (generally referenced by the process arrow 1303). In this manner, the Near-RT RIC subscribes to the above-listed parameters from the E2 Node (DU) and provides the triggers for the E2 Node to communicate the subscribed information. Subsequently, the E2 Node (DU) detects the RIC event trigger (as shown in box 1304). In the case of the REPORT trigger event occurring, the REPORT service sends the above-listed parameters from the E2 Node 131 (DU) to the Near-RT RIC 132 in an RIC INDICATION report (as shown by the process arrow 1307). The Near-RT RIC uses the received information to detect an overload condition. In parallel, DU continues to run radio resource management methods (including scheduling methods) with the latest POLICY it had received before the current time, as shown in box 1305 and 1306. The Near-RT RIC can continue to analyze data received as part of RIC Indication 1307, update policy (for overload control) to be used at E2 node and inform updated POLICY to E2 node 131. As another alternative, the Near-RT RIC 132 can also request a SUBSCRIPTION from the E2 node 131 for action type INSERT with the corresponding Event Trigger (to help detect overload events). In this case, the E2 node 131 notifies the Near-RT RIC 132 when the event occurs and the Near-RT RIC can communicate action to be taken for overload management at the E2 node 131 using the RIC CONTROL request.

We now turn to FIG. 20, which illustrates a signal flow diagram of an example embodiment of a method for overload optimization at the DU 131b, based on analysis of various parameters performed at the near-RT RIC 132. As shown by the process arrow 1401, the above-described E2AP SUBSCRIPTION procedure is implemented for the near-RT RIC 132 to receive various measurement parameters from the DU 131b. Next, as shown by the process arrow 1402, various measurement parameters (e.g., including various overload-related parameters) are sent from the DU 131b to the near-RT RIC 132. As shown at 1403, the near-RT RIC 132 analyzes the various overload-related parameters received from the DU 131b to detect overload conditions. If the near-RT-RIC 132 detects an overload condition (e.g., based on at least one of the DU processing load, the number of active UEs, PRB utilization, and/or the number of packets per transmission time interval (TTI), etc.), the near-RT RIC 132 communicates to the DU 131b to perform an action to handle the overload situation gracefully, as shown by the process arrow 1404.

As an example of an action to handle the overload control gracefully, the near-RT RIC 132 can ask the DU 131b to start computing the scheduling metric for only a subset of active UEs in every slot (TTI). In this case, the near-RT RIC 132 can also provide the transmission window length and the subset of active UEs for which scheduling metric needs to be computed in a given TTI within the transmission window. Alternatively, the near-RT RIC 132 can provide one or more policies to the DU 131b to enable the DU to identify a subset of UEs for which the scheduling metric needs to be computed in a given TTI within the transmission window. Along with this, the near-RT RIC 132 can also consider the 5QIs of DRBs that are being supported by active UEs in each cell, and the near-RT RIC 132 can also ask the DU 131b to reduce the amount of resources that the DU 131b provides to each cell given the SQI DRB mix for that cell (e.g., the number of UEs of different SQI combinations which can be scheduled per slot, or the amount of PRBs which can be allocated in each cell given the SQI mix of UEs in that cell). Suitable objects are added in the E2 protocol for this purpose. Finally, as shown by the process arrow 1405, when the overload condition no longer exists, the near-RT RIC 132 instructs the DU 131b to switch over to the normal mode of operation.

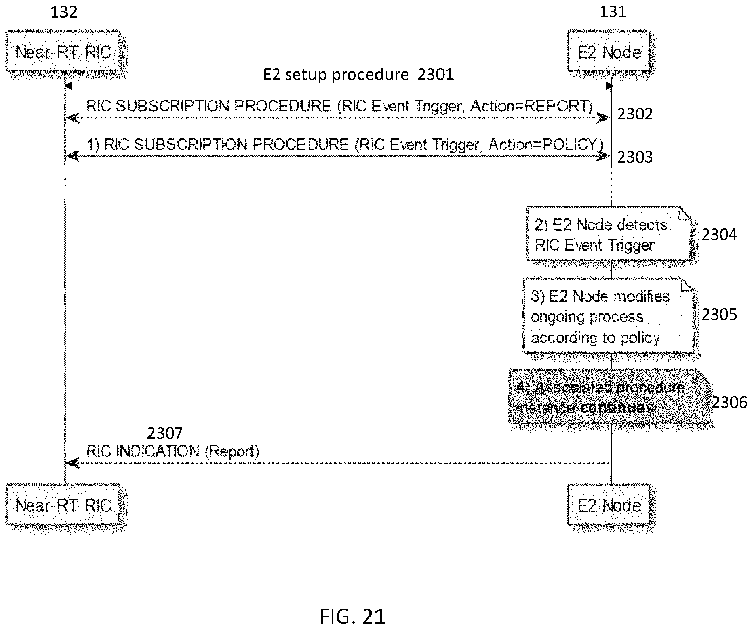

According to an example embodiment, DL and UL overload control optimizations for stand-alone (SA) 4G/5G and non-stand-alone (NSA) architectures are implemented at the CU-UP based on the overload analysis performed at a near-RT RIC. In this example embodiment, the near-RT RIC subscribes to the following parameters (e.g., performance measures) from a particular CU-UP (as explained below in further detail in connection with FIG. 21):

1) The number of DRBs for which the particular CU-UP is carrying traffic (for a given DU).

2) DL and UL processing load at the particular CU-UP (across multiple processors available in the CU-UP server).

3) PDCP service data unit (SDU) or PDU drops in the PDCP queues at the CU-UP due to non-availability of buffer space in the corresponding RLC queues in the DU (as reported by the DU to CU-UP, as part of flow control feedback message DDDS).

4) Identity of DRBs for which PDCP SDUs or PDUs are being dropped at the CU-UP due to non-availability of space in CU-UP queues.

5) Available buffer space in PDCP queues at the CU-UP.

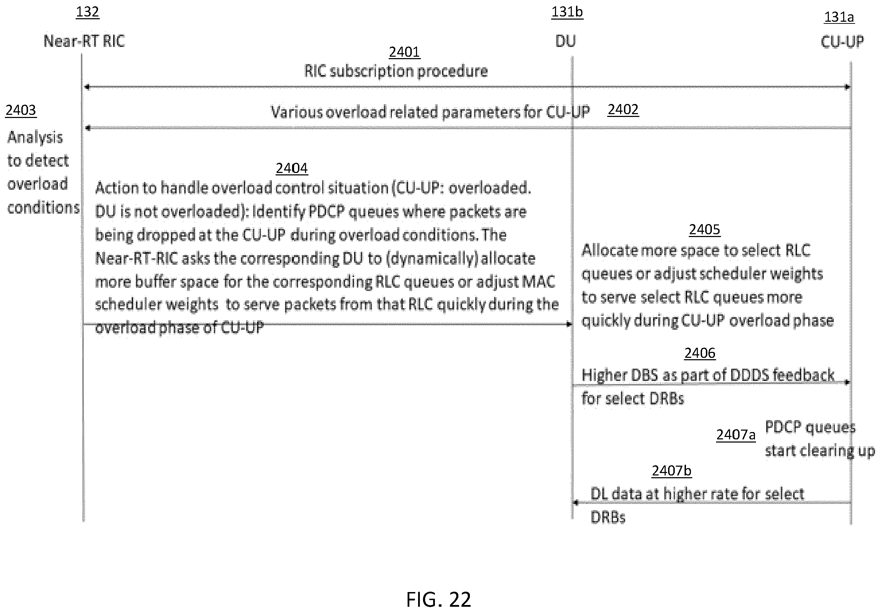

The above-listed parameters are measured or computed every measurement interval T and communicated from the E2 Node 231 (CU-UP in this example) to the near-RT-RIC 132 (e.g., as shown in FIG. 21). Alternatively, these parameters can be communicated to the near-RT RIC 132 based on some events (e.g., sending these parameters from the CU-UP to the near-RT-RIC when the processing load in DL or UL direction exceeds a specified threshold, or available buffer space in CU-UP for PDCP SDUs or PDUs falls below a specified threshold). These parameters are analyzed at the near-RT-RIC to detect an overload condition (e.g., as explained in connection with FIG. 22).

As shown in FIG. 21, which is a signal flow diagram of E2AP SUBSCRIPTION procedure utilized for overload optimization using an RIC in conjunction with a CU-UP, the example method starts with an E2 setup procedure 2301 between the E2 Node 131 (CU-UP in this case) and the near-RT RIC 132, which E2 setup procedure is as specified in the O-RAN and 3GPP specifications. The next step involves the RIC subscription procedure including a sequence of actions: i) Near-RT RIC 132 requests a SUBSCRIPTION from the E2 Node 131 for action type REPORT, with the corresponding Event Trigger (e.g., periodic trigger, or processing load in DL or UL exceeds a specified threshold, or available buffer space in CU-UP for PDCP SDUs or PDUs falls below a specified threshold), and the E2 Node 131 acknowledges the SUBSCRIPTION (generally referenced by the process arrow 2302); and ii) Near-RT RIC 132 requests a SUBSCRIPTION from the E2 Node 131 for POLICY, with the corresponding Event Trigger , and the E2 Node 131 acknowledges the SUBSCRIPTION (generally referenced by the process arrow 2303). In this manner, the Near-RT RIC 132 subscribes to the above-listed parameters from the E2 Node 131 (CU-UP in this example) and provides the triggers for the E2 Node to communicate the subscribed information. Subsequently, the E2 Node 131 (CU-UP) detects the RIC event trigger (as shown in box 2304). In the case of the REPORT trigger event occurring, the REPORT service sends the above-listed parameters from the E2 Node 131 (CU-UP) to the Near-RT RIC 132 in an RIC INDICATION report (as shown by the process arrow 2307). The Near-RT RIC 132 uses the received information to detect an overload condition. In parallel, the E2 node continues to run with the latest policy it had received before the current time, as shown in box 2305 and 2306. The Near-RT RIC 132 can continue to analyze data received as part of the RIC Indication 2307, update policy to be used at the E2 node (CU-UP here) for overload management and inform updated POLICY to the E2 node. As another alternative, the Near-RT RIC 132 can also request a SUBSCRIPTION from the E2 node 131 for action type INSERT with the corresponding Event Trigger (to help detect overload events). In this case, the E2 node 131 notifies the Near-RT RIC 132 when the event occurs and the Near-RT RIC 132 can communicate action to be taken for overload management at the E2 node 131 with the RIC CONTROL request.

We now turn to FIG. 22, which illustrates a signal flow diagram of an example embodiment of a method for overload optimization at the CU-UP 131a, based on analysis of various parameters performed at the near-RT RIC 132. As shown by the process arrow 2401, the above-described E2AP SUBSCRIPTION procedure is implemented for the near-RT RIC 132 to receive various measurement parameters from the CU-UP 131a. Next, as shown by the process arrow 2402, various measurement parameters (e.g., including various overload-related parameters) are sent from the CU-UP 131a to the near-RT RIC 132. As shown at 2403, the near-RT RIC 132 analyzes the various overload-related parameters received from the CU-UP 131a to detect overload conditions. If the near-RT-RIC 132 detects an overload condition (e.g., based on at least one of the above-listed parameters, such as available buffer space, the processing overload at CU-UP, etc.), the near-RT RIC 132 communicates to the CU-UP 131a (and associated DUs) to perform an action to handle the overload situation gracefully, as shown by the process arrow 2404.

As an example of an action to handle the overload control gracefully (e.g., as shown by the process arrow 2404), the near-RT RIC 132 can identify the DRBs which are dropping packets in the PDCP queues at the CU-UP 131a during overload conditions (e.g., when available buffer space at the CU-UP is below a specified threshold). Under normal conditions, the CU-UP can potentially allocate a higher amount of buffer space to such DRBs to reduce the packet drops from the PDCP queues. If the CU-UP 131a is overloaded, it may not be possible to allocate more buffer space to corresponding PDCP queues at the CU-UP 131a. If the near-RT-RIC 132 detects that CU-UP 131a is overloaded and the DU 131b is not overloaded, the near-RT RIC 132 sends message(s) to the corresponding DU 131b to dynamically allocate more buffer space to the corresponding RLC queues or adjust MAC scheduler weights to give higher preference to the corresponding DRBs (which actions are referenced by 2405; process arrow 2406 shows DU 131b sending to the CU-UP 131a a higher desired buffer size (DBS) as part of DDDS feedback for select DRBs), thereby helping to create space in the RLC queues for such DRBs, which in turn helps the CU-UP in sending packets faster from the PDCP queues to the RLC queues at the DU for such DRBs (leading to PDCP queues clearing up, as shown at 2407a, and a higher rate of DL data for select DRBs, as shown by the process arrow 2407b). Suitable objects are added in the E2 protocol for this purpose.

According to an alternative example embodiment, DL and UL overload control optimizations for stand-alone (SA) 4G/5G and non-stand-alone (NSA) architectures are implemented at the CU-UP without the assistance of a near-RT RIC. This alternative example embodiment is substantially similar to the above-described embodiment utilizing the near-RT RIC in conjunction with the CU-UP, except for the following differences:

1) The overload-control-related processing occurs at the CU-UP, including the detection of an overload condition (e.g., based on at least available buffer space in PDCP queues at the CU-UP, the processing overload at CU-UP, etc., as listed above).

2) The CU-UP communicates the overload-control-related actions, e.g., asking the DU to provide more buffer space to the corresponding RLC queues in the DU, or adjust scheduler weights to give higher preference to these DRBs during the CU-UP overload phase. These overload-control-related actions can be communicated by using reserved bits in the downlink NR-U data plane PDU which is sent from the CU-UP to the DU (as per 3GPP TS38.425).

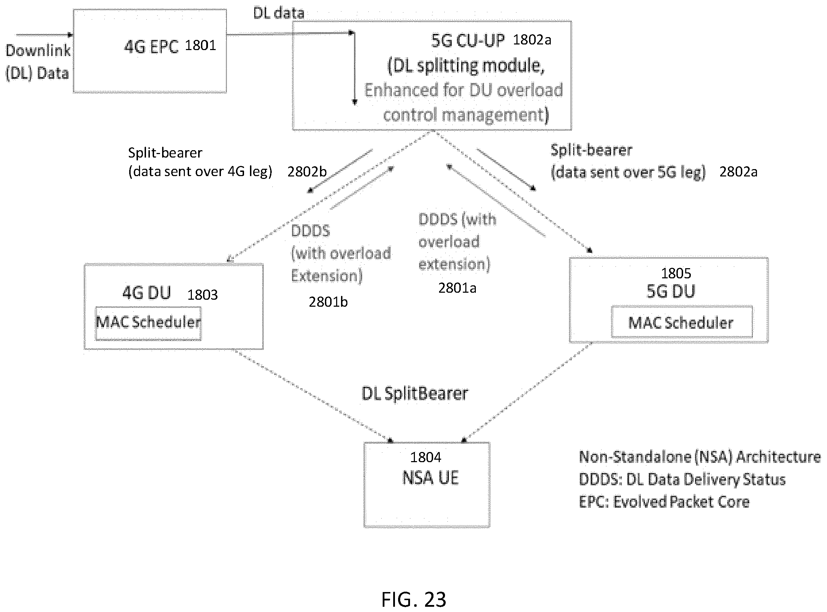

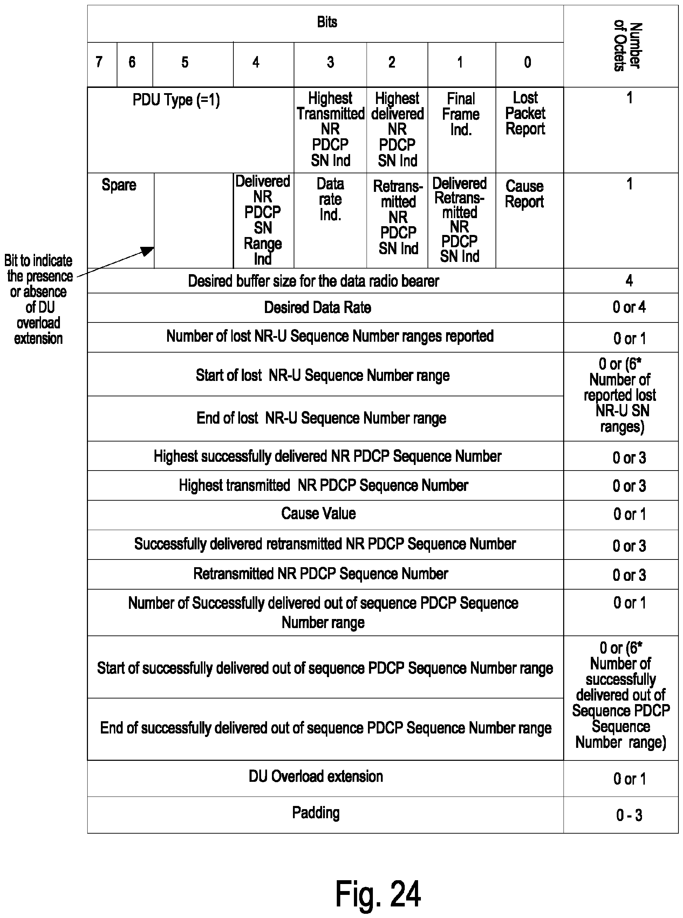

According to an example embodiment of a method, overload control optimization for NSA architecture is provided. As previously discussed in connection with FIG. 18, which shows non-stand-alone (NSA) architecture, DL traffic received from the 4G core network is dynamically split at the 5G CU-UP into i) a first portion which is routed to the NSA UE via the 4G DU, and ii) a second portion which is routed to the NSA UE via the 5G DU. The example embodiment of the method for overload control optimization for NSA architecture will be explained in conjunction with FIGS. 23 and 24.

FIG. 23 depicts the same NSA architecture as the one shown in FIG. 18, but FIG. 23 additionally shows the novel features for implementing overload control optimization at the 5G DU (or 4G DU). In the architecture shown in FIG. 23, DL (downlink) data traffic goes from 4G EPC 1801 to 5G CU-UP 1802a (which has enhanced functionality for DU overload control management), where the data traffic is split across two different transmission paths (or network legs): 1) 5G CU-UP 1802a to 4G DU 1803, then to NSA UE 1804; and 2) 5G CU-UP 1802a to 5G DU 1805, then to NSA UE 1804, and the DL data of the two transmission paths are combined at the NSA UE 1804. Flow control between CU-UP and DU is run 1) between 5GDU 1805 and 5G CU-UP 1802a, and 2) between 4G DU 1803 and 5G CU-UP 1802a, which flow control involves DDDS. For implementing overload control optimization, a "DU overload extension" is added to the DDDS message, the structure of which is illustrated in FIG. 24, and as referenced by the process arrows 2801a (DDDS message from the 5GDU 1805) and 2801b (DDDS message from the 4G DU 1803) in FIG. 23. In addition, the activity factor for each DRB is monitored (e.g., if a full-buffer DRB always has data to send, the activity factor for this DRB can be 100%, while other DRBs may have a much lower activity factor). For example, some of the high data rate video conferencing DRBs can have a much higher activity factor than DRBs carrying VoNR traffic.

When a DU gets overloaded, the enhanced DDDS message with the "DU overload extension" field is used to communicate a DU overload situation to the 5G CU-UP 1802a. As an example, if a DU (e.g., 5GDU 1805 or 4G DU 1803) gets overloaded (e.g., as indicated by the DU's CPU utilization exceeding a specified threshold), this overload situation can be indicated (e.g., in a DDDS with DU overload extension 2801a from 5GDU 1805, or in a DDDS with DU overload extension 2801b from 4G DU 1803 in FIG. 23) to the 5G CU-UP 1802a, e.g., for selected DRBs which have a very high activity factor exceeding a specified threshold. It should be noted that DDDS is sent separately for each DRB from the DU to CU-UP. When a DU sends an enhanced DDDS with overload extension for some DRBs, it takes certain actions to reduce the impact of overload. For example, if the 5G DU 1805 indicates an overload situation as part of enhanced DDDS message to the 5G CU-UP 1802a for a select set of DRBs (such as DRBs with very high activity factor), the 5G CU-UP 1802a (i.e., the packet splitting module) takes actions to reduce the activity factor for some of these DRBs for the 5G DU 1805. As an example, the 5G CU-UP 1802a (i.e., the packet splitting module) can start sending more data (i.e., increased data rate) over the 4G leg (which is referenced by 2802b) in comparison to the data rate over the 5G leg 2802a (i.e., reduce the data rate to reduce the activity factor for some DRBS), or the 5G CU-UP 1802a can even switch the DRB to 4G if possible. This action helps to reduce the impact of overload on 5GDU 1805, and at the same time, it can help in utilizing the 4G resources more effectively.

In an alternative embodiment, a combination of the above-described techniques can be implemented. For example, an initial phase of overload control optimization can utilize the above-described "DU overload extension" technique, and if the overload condition persists, a subsequent phase of overload control optimization can additionally utilize the previously described overload control technique implemented by the DU. In yet another example, an initial phase of overload control optimization can utilize the previously described overload control technique implemented by the DU, and if the overload condition persists, a subsequent phase of overload control optimization can additionally utilize the above-described "DU overload extension" technique. A particular combination (e.g., one of the above) can be chosen depending on the network operator policies.

In another alternative embodiment, the above-described "DU overload extension" technique can be distributed across DUs, CU and RIC. In this example embodiment, 5G and 4G DUs communicate various parameters to a near-RT-RIC, e.g., parameters which help the near-RT RIC determine whether or not a DU is getting overloaded, and activity factor for various DRBs. At the same time, the 5G CU-UP continues communicating packet-splitting-related parameters to the near-RT-RIC. Once an overload condition for the 5G DU is detected by the near-RT RIC, the near-RT RIC changes the splitting ratio for some DRBs (e.g., DRBs with high activity factor) and informs the CU-UP of the change in the splitting ratio. In response, the CU-UP can reduce the data rate across the 5G leg for some DRBs to decrease their activity factor for the 5G DU, while the data rate across the 4G leg for these DRBs can be increased. A similar solution can be implemented when an overload condition for the 4G DU is detected, i.e., the data rate across the 4G leg is reduced, while the data rate across the 5G leg can be increased.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

For the sake of completeness, a list of abbreviations used in the present specification is provided below:

5GC: 5G Core Network
5G NR: 5G New Radio
SQI: 5G QoS Identifier

ACK: Acknowledgement

AM: Acknowledged Mode

APN: Access Point Name

ARP: Allocation and Retention Priority

BS: Base Station

CP: Control Plane

CU: Centralized Unit

CU-CP: Centralized Unit - Control Plane

CU-UP: Centralized Unit - User Plane

DL: Downlink

DDDS: DL Data Delivery Status

DNN: Data Network Name

DRB: Data Radio Bearer

DU: Distributed Unit

eNB: evolved NodeB

EPC: Evolved Packet Core

GBR: Guaranteed Bit Rate

gNB: gNodeB

GTP-U: GPRS Tunneling Protocol - User Plane

IP: Internet Protocol

L1: Layer 1

L2: Layer 2

L3: Layer 3

L4S: Low Latency, Low Loss and Scalable Throughput

LC: Logical Channel

MAC: Medium Access Control

NACK: Negative Acknowledgement

NAS: Non-Access Stratum

NR-U: New Radio - User Plane

O-RAN: Open Radio Access Network

PDB: Packet Delay Budget

QCI: QoS Class Identifier

QFI: QoS Flow Id

QoS : Quality of Service

PDCP : Packet Data Convergence Protocol

PDU: Protocol Data Unit

PHY: Physical Layer

QFI: QoS Flow Identifier

RAT: Radio Access Technology

RDI: Reflective QoS Flow to DRB Indication

RLC: Radio Link Control

RLC-AM: RLC Acknowledged Mode

RLC-UM: RLC Unacknowledged Mode

RQI: Reflective QoS Indication

RRC: Radio Resource Control

RU: Radio Unit

SCTP: Stream Control Transmission Protocol

SDAP: Service Data Adaptation Protocol

TCP: Transmission Control Protocol

TEID: Tunnel Endpoint Identifier

UE: User Equipment

UP: User Plane

UL: Uplink

UM: Unacknowledged Mode

UPF: User Plane Function

**Claims**

1. A method of implementing at least one of downlink (DL) and uplink (UL) data traffic overload control utilizing an E2 node comprising at least one of a distributed unit (DU) and a centralized unit (CU) for at least one of 1) a stand-alone (SA) 4G architecture or a SA 5G architecture wireless network, and 2) a non-stand-alone (NSA) architecture wireless network serving user equipments (UEs), comprising:

   detecting, by utilizing at least the E2 node, an overload condition at the E2 node; and
   performing an overload control action utilizing at least the E2 node, wherein the overload control action comprises at least one of: i) reducing a number of UEs for which corresponding scheduling metric is computed in each transmission time interval (TTI); ii) reducing a number of UEs for which UL grant is given; iii) reducing a size of UL grant given to each UE; (iv) reducing the amount of radio resource the E2 node provides to each cell of the wireless network; (v) dynamically allocating increased buffer spaces to radio link control (RLC) queues in the DU; (vi) reducing an activity factor for selected data radio bearers (DRBs); (vii) changing scheduling metrics for delay-sensitive applications; and (viii) in the case of the NSA architecture wireless network, adjusting relative data transmission rates between a 4G leg of data transmission and a 5G leg of data transmission to a served UE.

2. The method according to claim 1, wherein the overload control utilizes at least the DU.

3. The method according to claim 2, wherein the overload control action comprises:
   computing scheduling metrics for only a subset of UEs among active UEs in each TTI within a time window of W number of TTIs, wherein W > 1, and wherein the scheduling metric for each active UE is computed only once within the time window of W number of TTIs.

4. The method according to claim 3, wherein:
   in the case of i) additional UEs becoming active during the time window of W number of TTIs, and ii) W is less than a specified minimum threshold, computing scheduling metrics of the additional UEs in the subsequent time window.

5. The method according to claim 3, wherein:
   in the case of i) additional UEs becoming active during the time window of W number of TTIs, and ii) the number of additional UEs is less than a specified threshold, computing scheduling metrics of the additional UEs in remaining TTIs within the time window.

6. The method according to claim 2, wherein:

   the overload control further utilizes a near-real-time radio intelligent controller (near-RT RIC); and
   the near-RT RIC utilizes at least one of the following measurement parameters sent by the DU to detect the overload condition: DU processing load, the number of active UEs, physical resource block (PRB) utilization, and the number of packets per TTI.

7. The method according to claim 6, wherein the overload control action comprises:
   requesting, by the near-RT RIC to the DU, to compute scheduling metrics for only a subset of active UEs in every TTI within a transmission window.

8. The method according to claim 6, wherein the overload control action comprises: sending, by the near-RT RIC to the DU, at least one policy to enable the DU to identify a subset of active UEs for which scheduling metrics need to be computed in a given TTI within a transmission window.

9. The method according to claim 1, wherein the overload control utilizes at least a centralized unit user plane (CU-UP).

10. The method according to claim 9, wherein the CU-UP detects the overload condition based on at least one of the following parameters:

    1) the number of data radio bearers (DRBs) for which the CU-UP is carrying traffic;
    2) DL and UL processing load at the CU-UP;
    3) Packet Data Convergence Protocol (PDCP) service data unit (SDU) or Protocol Data Unit (PDU) drops in PDCP queues at the CU-UP due to non-availability of buffer space in corresponding Radio Link Control (RLC) queues in a DU;

4) identity of DRBs for which PDCP SDUs or PDUs are being dropped at the CU-UP due to non-availability of space in CU-UP queues; and
5) available buffer space in PDCP queues at the CU-UP.

**11.** The method according to claim 10, wherein the overload control action comprises:
instructing, by the CU-UP to the DU, to one of i) dynamically allocate more buffer space to the corresponding RLC queues in the DU, or ii) adjust scheduler weights to give higher preference to the corresponding DRBs.

**12.** The method according to claim 9, wherein:

the overload control further utilizes a near-real-time radio intelligent controller (near-RT RIC); and
the near-RT RIC utilizes at least one of the following measurement parameters sent by the CU-UP to detect the overload condition:

1) the number of data radio bearers (DRBs) for which the CU-UP is carrying traffic;
2) DL and UL processing load at the CU-UP;
3) Packet Data Convergence Protocol (PDCP) service data unit (SDU) or Protocol Data Unit (PDU) drops in PDCP queues at the CU-UP due to non-availability of buffer space in corresponding Radio Link Control (RLC) queues in a DU;
4) identity of DRBs for which PDCP SDUs or PDUs are being dropped at the CU-UP due to non-availability of space in CU-UP queues; and
5) available buffer space in PDCP queues at the CU-UP.

**13.** The method according to claim 12, wherein the overload control action comprises:
instructing, by the near-RT RIC to the DU, to one of i) dynamically allocate more buffer space to the corresponding RLC queues in the DU, or ii) adjust scheduler weights to give higher preference to the corresponding DRBs.

**14.** The method according to claim 2, wherein:

the overload control is performed in the non-stand-alone (NSA) architecture wireless network;
an overload condition is detected by one of a 4G DU or a 5G DU of the NSA architecture wireless network based on utilization of central processing unit (CPU) of the one the 4G DU or the 5G DU exceeding a specified threshold.

**15.** The method according to claim 14, wherein:
the one the 4G DU or the 5G DU indicates the overload condition to a CU-UP in the NSA architecture wireless network by sending an enhanced DL Data Delivery Status (DDDS) message including a DU overload extension field for a DRB.

**16.** The method according to claim 15, wherein:

i) in the case the 5G DU is overloaded, the CU-UP implements the overload control action by increasing the data transmission rate over the 4G leg in comparison to the data transmission rate over the 5G leg; and
ii) in the case the 4G DU is overloaded, the CU-UP implements the overload control action by increasing the data transmission rate over the 5G leg in comparison to the data transmission rate over the 4G leg.

**17.** The method according to claim 2, wherein:

DL overload condition is detected based on one of processing load or DL packet rate at the DU exceeding a specified threshold; and
implementing, by the DU, a DL overload control action comprising a change in at least one of a desired buffer size (DBS) and a desired data rate (DDR) which is sent as part of DL Data Delivery Status (DDDS) message from the DU to a centralized unit user plane (CU-UP) for each selected DRB.

**18.** The method according to claim 17, wherein a reduced value of DBS is sent as part of the DDDS message for each selected DRB from the DU to the CU-UP.

**19.** The method according to claim 17, wherein a reduced DDR is sent as part of the DDDS message for each selected DRB from the DU to the CU-UP.

20. The method according to claim 2, wherein:
the overload control action comprises, in a given TTI, changing scheduling metrics for delay-sensitive applications whose radio link control (RLC) packets have been in the DU's RLC queues for longer duration compared to UEs in a subsequent TTI.

FIG. 1

FIG. 2

EP 4 432 725 A1

5GC  303

NG-RAN 301

gNB 302

NG

NG

Xn-C

302
gNB

304
gNB-CU

F1

F1

305
gNB-DU

305
gNB-DU

FIG. 3

FIG. 4

EP 4 432 725 A1

FIG. 5

FIG. 6

FIG. 7

EP 4 432 725 A1

FIG. 8

FIG. 9

Downlink (DL) IP packets

903 UPF (as part of 5G core network)

One GTP-U tunnel per
PDU session between UPF and CU-UP

(e.g. 10s or 100s of thousands of
PDU sessions and DRBs per CU-UP)

504
SDAP at CU-UP: QoS
flows mapped to DRBs

PDU
Session 1

PDU
Session 2

304b CU-UP:
SDAP,
PDCP

One GTP-U tunnel per
DRB between CU-UP and DU

DRB1        DRB2

DRB3
DRB4

(e.g. Thousands of DRBs per DU)

305

DU: RLC,
     MAC,
     PHY (upper parts)

1001   MAC Scheduler

One (logical) RLC queue per DRB
(or per logical channel)

PHY (upper parts)

306   RU

101

UE x1      UE x2      UE x3              UE xm      UE xn

FIG. 10

EP 4 432 725 A1

FIG. 11

EP 4 432 725 A1

1101b1

| RDI | RQI | QFI | Octet 1  1201a |
|-----|-----|-----|----------------|
| Data | | | Octet 2 |
| . . . . | | | |
| Data | | | Octet N |

FIG. 12a

1101b2

| D/C | R | QFI | Octet 1  1201b |
|-----|---|-----|----------------|
| Data | | | Octet 2 |
| . . . . | | | |
| Data | | | Octet N |

FIG. 12b

EP 4 432 725 A1

1401

1402

node hosting
NR PDCP

corresponding
node

DL USER DATA

FIG. 13

EP 4 432 725 A1

1401

node hosting
NR PDCP

1402

corresponding
node

DL DATA DELIVERY STATUS

FIG. 14

1401 node hosting NR PDCP

1402 corresponding node

ASSISTANCE INFORMATION DATA

FIG. 15

| Bits | | | | | | | | Number of Octets |
|---|---|---|---|---|---|---|---|---|
| 7 | 6 | 5 | 4 | 3 | 2 | 1 | 0 | |
| PDU Type (=1) | | | | Highest Transmitted NR PDCP SN Ind | Highest delivered NR PDCP SN Ind | Final Frame Ind. | Lost Packet Report | 1 |
| Spare | | | Delivered NR PDCP SN Range Ind | Data rate Ind. | Retrans-mitted NR PDCP SN Ind | Delivered Retrans-mitted NR PDCP SN Ind | Cause Report | 1 |
| Desired buffer size for the data radio bearer | | | | | | | | 4 |
| Desired Data Rate | | | | | | | | 0 or 4 |
| Number of lost NR-U Sequence Number ranges reported | | | | | | | | 0 or 1 |
| Start of lost NR-U Sequence Number range | | | | | | | | 0 or (6* Number of reported lost NR-U SN ranges) |
| End of lost NR-U Sequence Number range | | | | | | | | |
| Highest successfully delivered NR PDCP Sequence Number | | | | | | | | 0 or 3 |
| Highest transmitted NR PDCP Sequence Number | | | | | | | | 0 or 3 |
| Cause Value | | | | | | | | 0 or 1 |
| Successfully delivered retransmitted NR PDCP Sequence Number | | | | | | | | 0 or 3 |
| Retransmitted NR PDCP Sequence Number | | | | | | | | 0 or 3 |
| Number of Successfully delivered out of sequence PDCP Sequence Number range | | | | | | | | 0 or 1 |
| Start of successfully delivered out of sequence PDCP Sequence Number range | | | | | | | | 0 or (6* Number of successfully delivered out of Sequence PDCP Sequence Number range) |
| End of successfully delivered out of sequence PDCP Sequence Number range | | | | | | | | |
| Padding | | | | | | | | 0 - 3 |

## Fig. 16

Downlink (DL) IP packet
Transmit (Tx) queue for DRB k

Downlink (DL) IP
packet for DRB j

304b
CU-UP

PDCP SDU

PDCP PDU

ReTransmit (ReTx) queue
for PDCP PDUs of DRB k

DDDS
(DBS,
DDR)

DL data

Midhaul (MH)

305
DU

RLC SDU

RLC PDU

MAC Scheduler   1001

Towards UE

FIG. 17

FIG. 18

132                                                                                      131

┌─────────────┐                                                          ┌─────────────┐
│ Near-RT RIC │                                                          │   E2 Node   │
└─────────────┘                                                          └─────────────┘

                          E2 setup procedure  1301

      RIC SUBSCRIPTION PROCEDURE (RIC Event Trigger, Action=REPORT)        1302

      1) RIC SUBSCRIPTION PROCEDURE (RIC Event Trigger, Action=POLICY)     1303

                                           ┌──────────────────────┐
                                           │ 2) E2 Node detects   │  1304
                                           │ RIC Event Trigger    │
                                           └──────────────────────┘

                                           ┌──────────────────────┐
                                           │ 3) E2 Node modifies  │
                                           │ ongoing process      │  1305
                                           │ according to policy  │
                                           └──────────────────────┘

                                           ┌──────────────────────┐
                                           │ 4) Associated procedure │
                                           │ instance **continues**  │  1306
                                           └──────────────────────┘

           1307
      RIC INDICATION (Report)

┌─────────────┐                                                          ┌─────────────┐
│ Near-RT RIC │                                                          │   E2 Node   │
└─────────────┘                                                          └─────────────┘

FIG. 19

132
Near-RT RIC

131b
DU

RIC subscription procedure  1401

Various overload related parameters  1402

1403
Analysis
to detect
overload
conditions

Action to handle overload control gracefully  1404

Switch over to normal mode when overload condition doesn't exist  1405

FIG. 20

132                                                       131

| Near-RT RIC | | E2 Node |

E2 setup procedure 2301

RIC SUBSCRIPTION PROCEDURE (RIC Event Trigger, Action=REPORT) 2302

1) RIC SUBSCRIPTION PROCEDURE (RIC Event Trigger, Action=POLICY) 2303

2) E2 Node detects RIC Event Trigger 2304

3) E2 Node modifies ongoing process according to policy 2305

4) Associated procedure instance **continues** 2306

2307
RIC INDICATION (Report)

| Near-RT RIC | | E2 Node |

FIG. 21

FIG. 22

DL data

Downlink (DL) Data

4G EPC  1801

5G CU-UP  1802a
(DL splitting module,
Enhanced for DU overload
control management)

Split-bearer
(data sent over 4G leg)  2802b

Split-bearer
(data sent over 5G leg)  2802a

DDDS
(with overload
Extension)
2801b

DDDS (with
overload
extension)
2801a

4G DU  1803

MAC Scheduler

1805
5G DU

MAC Scheduler

DL SplitBearer

1804
NSA UE

Non-Standalone (NSA) Architecture
DDDS: DL Data Delivery Status
EPC: Evolved Packet Core

FIG. 23

| Bits | | | | | | | | Number of Octets |
|---|---|---|---|---|---|---|---|---|
| 7 | 6 | 5 | 4 | 3 | 2 | 1 | 0 | |
| PDU Type (=1) | | | | Highest Transmitted NR PDCP SN Ind | Highest delivered NR PDCP SN Ind | Final Frame Ind. | Lost Packet Report | 1 |
| Spare | | | Delivered NR PDCP SN Range Ind | Data rate Ind. | Retrans-mitted NR PDCP SN Ind | Delivered Retrans-mitted NR PDCP SN Ind | Cause Report | 1 |
| Desired buffer size for the data radio bearer | | | | | | | | 4 |
| Desired Data Rate | | | | | | | | 0 or 4 |
| Number of lost NR-U Sequence Number ranges reported | | | | | | | | 0 or 1 |
| Start of lost  NR-U Sequence Number range | | | | | | | | 0 or (6* Number of reported lost NR-U SN ranges) |
| End of lost  NR-U Sequence Number range | | | | | | | | |
| Highest successfully delivered NR PDCP Sequence Number | | | | | | | | 0 or 3 |
| Highest transmitted  NR PDCP Sequence Number | | | | | | | | 0 or 3 |
| Cause Value | | | | | | | | 0 or 1 |
| Successfully delivered retransmitted NR PDCP Sequence Number | | | | | | | | 0 or 3 |
| Retransmitted NR PDCP Sequence Number | | | | | | | | 0 or 3 |
| Number of Successfully delivered out of sequence PDCP Sequence Number range | | | | | | | | 0 or 1 |
| Start of successfully delivered out of sequence PDCP Sequence Number range | | | | | | | | 0 or (6* Number of successfully delivered out of Sequence PDCP Sequence Number  range) |
| End of successfully delivered out of sequence PDCP Sequence Number range | | | | | | | | |
| DU Overload extension | | | | | | | | 0 or 1 |
| Padding | | | | | | | | 0 - 3 |

Bit to indicate the presence or absence of DU overload extension

# Fig. 24

Europäisches
Patentamt

European
Patent Office

Office européen
des brevets

# EUROPEAN SEARCH REPORT

**Application Number**

EP 24 16 3897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDREA LACAVA ET AL: "Programmable and Customized Intelligence for Traffic Steering in 5G Networks Using Open RAN Architectures", ARXIV.ORG, CORNELL UNIVERSITY LIBRARY, 201 OLIN LIBRARY CORNELL UNIVERSITY ITHACA, NY 14853, 28 September 2022 (2022-09-28), XP091329574, * figure 1 * * page 2, column 1, line 59 - line 64 * * paragraph [02.1] * * page 7, column 1, line 38 - column 2, line 10 * * paragraph [04.1] * * paragraph [0004] * * paragraph [03.2] * * paragraph [03.1] * * figure 2 * | 1-20 | INV. H04W28/02 H04W28/08 |
| A | US 2022/210708 A1 (PAREKH SHYAM [US] ET AL) 30 June 2022 (2022-06-30) * paragraph [0069]; figure 2 * | 1-20 | TECHNICAL FIELDS SEARCHED (IPC) H04W |
| A | PAUL H MASUR ET AL: "Artificial Intelligence in Open Radio Access Network", ARXIV.ORG, CORNELL UNIVERSITY LIBRARY, 201 OLIN LIBRARY CORNELL UNIVERSITY ITHACA, NY 14853, 19 April 2021 (2021-04-19), XP081940725, * paragraph [II.A] * * paragraph [II.B] * | 1-20 | |

The present search report has been drawn up for all claims

| Place of search | Date of completion of the search | Examiner |
|---|---|---|
| The Hague | 26 June 2024 | Gregori, Stefano |

EPO FORM 1503 03.82 (P04C01)

**ANNEX TO THE EUROPEAN SEARCH REPORT
ON EUROPEAN PATENT APPLICATION NO.**

EP 24 16 3897

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | Publication date | Patent family member(s) | Publication date |
|---|---|---|---|
| US 2022210708 A1 | 30-06-2022 | EP 4072192 A1 | 12-10-2022 |
| | | JP 2022105305 A | 13-07-2022 |
| | | US 2022210708 A1 | 30-06-2022 |

EPO FORM P0459

For more details about this annex : see Official Journal of the European Patent Office, No. 12/82